# EUROPEAN PATENT SPECIFICATION

(11) **EP 3 706 400 B1**
(45) Date of publication and mention of the grant of the patent: **15.11.2023**
(21) Application number: 18897076.8
(22) Date of filing: 14.12.2018
(51) Int. Cl.: G06F 3/04817, G06F 3/0488, H04M 1/72448, H04M 1/72469, H04M 1/72403

(54) **ICON MANAGEMENT METHOD AND DEVICE**
SYMBOLVERWALTUNGSVERFAHREN UND -VORRICHTUNG
PROCÉDÉ DE GESTION D'ICÔNE ET DISPOSITIF

(30) Priority: 28.12.2017 CN 201711463283
(43) Date of publication of application: 09.09.2020
(73) Proprietor: HUAWEI TECHNOLOGIES CO., LTD., Shenzhen, Guangdong 518129 (CN)
(72) Inventor: GUO, Xiaolei, Shenzhen, Guangdong 518129 (CN)
(74) Representative: Gill Jennings & Every LLP
(86) International application number: PCT/CN2018/121064
(87) International publication number: WO 2019/128732

(56) References cited:
- WO-A1-2011/126501
- CN-A- 103 034 390
- CN-A- 103 543 904
- CN-A- 103 577 044
- CN-A- 104 090 700
- CN-A- 106 055 243
- US-A1- 2010 295 789
- US-A1- 2013 050 119
- US-A1- 2016 188 179
- US-A1- 2016 202 887

## Description

### TECHNICAL FIELD

This application relates to the field of terminal technologies, and in particular, to an icon management method and apparatus.

### BACKGROUND

With popularization of terminals, especially with increasing user requirements, vendors develop a variety of applications for users to meet their diversified requirements. In a mobile phone, for example, icons of a variety of application programs are regularly arranged in a home screen of the mobile phone. As a quantity of icons in the home screen of the mobile phone increases, a user usually manages the icons in the home screen regularly to facilitate searching and use.

Currently, the user may manually move one icon from a position to another position in the home screen or move a plurality of selected icons in a batch. Although icons can be managed effectively in the foregoing manner, as a quantity of icons increases, there is a comparatively large quantity of pages on the home screen. In this case, if the user attempts to move an icon between two pages separated by many screens, the user needs to hold the icon and turn the pages until the screen in which the user wants to place the icon.

US2010295789 relates to mobile device and method for editing pages used for a home screen. WO2011126501 relates to device, method, and graphical user interface for managing folders. US2016188179 relates to mobile terminal and application icon moving method thereof. US2013050119 relates to device, method, and storage medium storing program. CN106055243 relates to application icon processing method and apparatus, and electronic device. CN103577044 relates to rapid management method for moving application icon onto desktop.

### SUMMARY

This application provides an icon management method and apparatus, to resolve a problem of tedious user operations in an icon management process due to a comparatively large quantity of pages on a home screen.

The invention has been defined in the independent claims. Further specific technical features have been defined in the dependent claims.

According to a first aspect, an implementation of the present disclosure provides an icon management method according to claim 1.

The method includes: receiving, by a terminal, an icon management operation from a user; displaying, by the terminal, an icon management interface in response to the icon management operation; receiving, by the terminal, an icon moving operation from the user; and displaying, by the terminal, a selected icon in a second position in response to the icon moving operation. The icon management interface includes at least two display sections, where a first display section is used to display one or more home screens of the terminal, and a second display section is used to display at least one newly added screen. In this implementation of the present disclosure, the icon moving operation is used to instruct moving the selected icon from a first position to the second position, the first position is in a screen in the first display section, the second position is in a screen in the first display section or the second display section, and the first position is different from the second position. The user may perform an operation separately in the first display section or in the second display section. For example, the user can flick left and right in the first display section to browse the home screen. Likewise, the user can flick left and right in the second display section to browse a second editing area. It can be learned from the foregoing that after receiving the icon management operation from the user, the terminal can present to the user the icon management interface that includes at least two display sections, so that the user can manage, in the icon management interface, an application program icon, a folder, or the like in the home screen of the terminal. For example, after the user enters the icon moving operation, the selected icon can be moved from the first position to the second position in the icon management interface. It also means that when the home screen of the terminal includes a comparatively large quantity of pages, the user can still move an icon conveniently and quickly through the icon moving operation in one display screen, that is, the icon management interface, thereby resolving a problem of tedious user operations in an icon management process due to a comparatively large quantity of pages on the home screen.

In the first aspect, a folder exists in the second position. The displaying the selected icon in the second position may be implemented as displaying, by the terminal, the folder in the second position, where the folder includes the selected icon. Moving, by the user, an icon to a position in which a folder exists is equivalent to adding the icon to the folder. Therefore, in this implementation of the present disclosure, after the icon is moved, the icon is located in the folder. In other words, a process of moving the icon is implemented as moving the icon into an existing folder. Likewise, both the first position and the second position are displayed in one display screen, that is, the icon management interface. Therefore, the user can move the icon conveniently and quickly. Especially when there is a comparatively large quantity of pages on the home screen, the user can move the icon without dragging the icon or the like for a long period of time.

In the first aspect, an icon exists in the second position, and the selected icon is a folder. After the terminal receives the icon moving operation from the user, the terminal responds to the icon moving operation, where the second position has no change from the first position. If the icon selected by the user is a folder, considering that an icon such as an application program icon or a folder already exists in the second position, the current icon moving operation of the user may be considered as a misoperation. In this case, the terminal does not move the icon selected by the user to the second position, but considers that the icon moving operation does not happen currently. Optionally, the terminal may prompt, by using voice or popping up a dialog box, the user that the current icon moving operation is incorrect, prompt the user to reenter an icon moving operation, or the like. This is not limited herein.

In a possible implementation, an icon exists in the second position. After the terminal receives the icon moving operation from the user, the terminal receives a folder creation operation from the user, and the displaying the selected icon in the second position in response to the icon moving operation may be implemented as displaying, by the terminal, a created folder in the second position in response to the icon moving operation and the folder creation operation, where the created folder includes the icon existing in the second position and the selected icon. In this implementation of the present disclosure, if an icon exists in the second position and the user enters the icon moving operation, the terminal may consider that the user wants to create a folder while moving the icon, to accommodate the icon already existing in the second position and the icon that the user is currently moving. In this case, the icon moving operation of the user is equivalent to moving the icon and creating the folder. Therefore, the user can move the icon and create the folder by using one move operation.

In a possible implementation, after the terminal displays the icon management interface in response to the icon management operation, the terminal receives a screen addition operation from the user, and adds a new screen to the second display section in response to the screen addition operation. In this way, the user terminal can provide the user with more new screens for the user to implement icon management, for example, an operation such as moving an icon or creating a folder, in the new screen.

In a possible implementation, after the terminal displays the icon management interface in response to the icon management operation, the terminal displays a delete key in a blank screen in the second display section. Then the terminal receives a screen deletion operation from the user, and deletes the blank screen from the second display section in response to the screen deletion operation, where no icon exists in the blank screen, and the screen deletion operation acts on the delete key. Considering that the user may have added too many new screens and the user currently does not want to retain all the newly added screens, the user may selectively delete a blank screen, that is, retain only a screen in which an icon exists.

In a possible implementation, after the terminal displays the icon management interface in response to the icon management operation, the terminal receives a screen deletion operation from the user. If an icon exists in a screen indicated by the screen deletion operation, the terminal prompts the user, in response to the screen deletion operation, that an application program corresponding to the icon in the deleted screen is uninstalled after the screen is deleted. Then, the terminal receives a deletion confirmation operation from the user, and deletes, from the second display section in response to the deletion confirmation operation, the screen indicated by the screen deletion operation. If no icon exists in the screen indicated by the screen deletion operation, the terminal deletes, from the second display section in response to the deletion confirmation operation, the screen indicated by the screen deletion operation. In an icon management process, the user may find application programs corresponding to some icons that are not commonly used. The user can delete these application programs in the icon management process. In other words, the icons of these application programs are moved to one or more new screens, and the one or more new screens are then deleted. That is, an application program corresponding to an icon existing in a screen is deleted by deleting the interface, thereby implementing effective icon management. In addition, to prevent the user from falsely deleting one or more application programs due to an accidental input of the screen deletion operation, in this implementation of the present disclosure, after receiving the screen deletion operation from the user, the terminal may alternatively ask, in a prompting manner, the user whether the currently selected interface needs to be deleted, and complete the deletion operation after obtaining permission from the user.

In a possible implementation, after the terminal displays the icon management interface in response to the icon management operation, the terminal receives a screen moving operation from the user, and then the terminal moves a selected screen to a position indicated by the screen moving operation in response to the screen moving operation. If the home screen includes a plurality of pages, the user may adjust a sequence of the home screens based on a preference of the user. Certainly, the user may alternatively insert, between two existing home screens, a screen newly created by the user. The newly created screen may include the icon that the user moves, or the like, and certainly, may alternatively be a blank interface or the like. This is not limited herein. In this way, the user can implement, in the icon management interface, screen management on a basis of implementing icon management.

In a possible implementation, after the terminal displays the icon management interface in response to the icon management operation, the terminal receives an icon management ending operation from the user, and displays, in response to the icon management ending operation, a home screen of the terminal resulting from icon management, where the home screen of the terminal is any one of current home screens of the terminal.

In a possible implementation, the current home screens of the terminal include interfaces in the first display section and the second display section that are in the icon management interface before the home screen that is of the terminal and that undergoes icon management is displayed.

In the first aspect, the first display section and the second display section are displayed in separate panes in the icon management interface. In this implementation of the present disclosure, a screen splitting manner of the icon management interface includes left-right screen splitting or top-bottom screen splitting. When the terminal is in a portrait mode, the first display section and the second display section are displayed in the top-bottom screen splitting manner in the icon management interface, and the first display section is located above or below the second display section; or when the terminal is in a landscape mode, the first display section and the second display section are displayed in the left-right screen splitting manner in the icon management interface, and the first display section is located on the left or right of the second display section.

### BRIEF DESCRIPTION OF DRAWINGS

FIG. 1 is a schematic structural diagram of a first terminal according to an implementation of the present disclosure;
FIG. 2(a) is a schematic diagram of a first display screen according to an implementation of the present disclosure;
FIG. 2(b) is a schematic diagram of a second display screen according to an implementation of the present disclosure;
FIG. 2(c) is a schematic diagram of a third display screen according to an implementation of the present disclosure;
FIG. 3 is a schematic diagram of a fourth display screen according to an implementation of the present disclosure;
FIG. 4(a) is a schematic diagram of a fifth display screen according to an implementation of the present disclosure;
FIG. 4(b) is a schematic diagram of a sixth display screen according to an implementation of the present disclosure;
FIG. 4(c) is a schematic diagram of a seventh display screen according to an implementation of the present disclosure;
FIG. 4(d) is a schematic diagram of an eighth display screen according to an implementation of the present disclosure;
FIG. 4(e) is a schematic diagram of a ninth display screen according to an implementation of the present disclosure;
FIG. 4(f) is a schematic diagram of a tenth display screen according to an implementation of the present disclosure;
FIG. 5(a) is a schematic diagram of an eleventh display screen according to an implementation of the present disclosure;
FIG. 5(b) is a schematic diagram of a twelfth display screen according to an implementation of the present disclosure;
FIG. 6(a) is a schematic diagram of a thirteenth display screen according to an implementation of the present disclosure;
FIG. 6(b) is a schematic diagram of a fourteenth display screen according to an implementation of the present disclosure;
FIG. 7(a) is a schematic diagram of a fifteenth display screen according to an implementation of the present disclosure;
FIG. 7(b) is a schematic diagram of a sixteenth display screen according to an implementation of the present disclosure;
FIG. 8(a) is a schematic diagram of a seventeenth display screen according to an implementation of the present disclosure;
FIG. 8(b) is a schematic diagram of an eighteenth display screen according to an implementation of the present disclosure;
FIG. 8(c) is a schematic diagram of a nineteenth display screen according to an implementation of the present disclosure;
FIG. 8(d) is a schematic diagram of a twentieth display screen according to an implementation of the present disclosure;
FIG. 8(e) is a schematic diagram of a twenty-first display screen according to an implementation of the present disclosure;
FIG. 9 is a schematic structural diagram of an icon management apparatus according to an implementation of the present disclosure; and
FIG. 10 is a schematic structural diagram of a second terminal according to an implementation of the present disclosure.

Description of marks in accompanying drawings:
201: basic information;
202: display screen;
203: screen paging mark;
204: function key;
205: return key;
206: folder;
207: first editing area;
208: second editing area;
209: screen addition key; and
210: screen deletion key.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

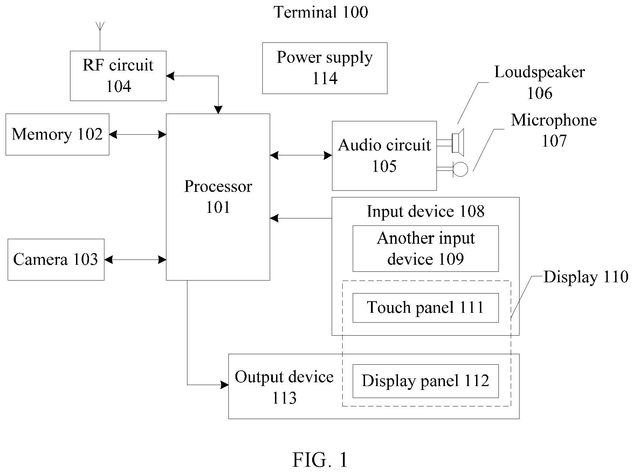

The implementations of the present disclosure may be applied to a terminal. The terminal may be a desktop device, a laptop device, or the like, and may be specifically a device such as a tablet computer, a handheld computer, a virtual reality (Virtual Reality, VR) device, an augmented reality (Augmented Reality, AR) device, a vehicle-mounted device, a wearable device, or a mobile phone. At least a camera, a display, an input device, and a processor are disposed in the terminal. A terminal 100 is used as an example. As shown in FIG. 1, the terminal 100 includes components such as a processor 101, a memory 102, a camera 103, an RF circuit 104, an audio circuit 105, a loudspeaker 106, a microphone 107, an input device 108, another input device 109, a display 110, a touch panel 111, a display panel 112, an output device 113, and a power supply 114. The display 110 includes at least the touch panel 111 that is used as an input device and the display panel 112 that is used as an output device. The camera 103 may include a front-facing camera and a rear-facing camera. It should be noted that a terminal structure shown in FIG. 1 does not constitute any limitation on the terminal, and the terminal may include components more or fewer than those shown in the figure, or some components are combined, or some components are split, or the components are disposed differently. This is not limited herein.

The following describes each component of the terminal 100 in detail with reference to FIG. 1.

The radio frequency (Radio Frequency, RF) circuit 104 may be configured to receive and send signals in an information receiving/sending process or a call process. For example, if the terminal 100 is a mobile phone, the terminal 100 may receive, by using the RF circuit 104, downlink information sent by a base station, and send the downlink information to the processor 101 for processing; and send uplink-related data to the base station. The RF circuit usually includes but is not limited to an antenna, at least one amplifier, a transceiver, a coupler, a low noise amplifier (Low Noise Amplifier, LNA), and a duplexer. In addition, the RF circuit 104 may also perform wireless communication with a network and another device. Any communications standard or protocol may be used for the wireless communication, including but not limited to: global system for mobile communications (Global System of Mobile Communication, GSM), general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), email, and short message service (Short Messaging Service, SMS).

The memory 102 may be configured to store a software program and a module. The processor 101 executes various function applications and data processing of the terminal 100 by running the software program and the module that are stored in the memory 102. The memory 102 may mainly include a program storage area and a data storage area. The program storage area may store an operating system, an application program required by at least one function (such as a voice playback function and an image playback function), and the like. The data storage area may store data (such as audio data and image data) created based on use of the terminal 100, and the like. In addition, the memory 102 may include a high-speed random access memory, and may alternatively include a nonvolatile memory, for example, at least one magnetic disk storage device, a flash memory device, or another volatile solid-state storage device.

The another input device 109 may be configured to receive input digit or character information, and generate key signal input related to user setting and function control of the terminal 100. Specifically, the another input device 109 may include but is not limited to one or more of a physical keyboard, a function key (such as a volume control key or an on/off key), a trackball, a mouse, a joystick, an optical mouse (the optical mouse is a touch-sensitive surface that does not display a visual output, or an extension of a touch-sensitive surface formed by a touchscreen), and the like. The another input device 109 may alternatively include a sensor built in the terminal 100, for example, a gravity sensor or an acceleration sensor. The terminal 100 may further use a parameter detected by the sensor as input data.

The display 110 may be configured to display information entered by a user or information provided for a user, and various menus of the terminal 100, and may further accept user input. In addition, the display panel 112 may be configured in a form of a liquid crystal display (Liquid Crystal Display, LCD), an organic light-emitting diode (Organic Light-Emitting Diode, OLED), or the like. The touch panel 111, also referred to as a touchscreen, a touch-sensitive screen, or the like, may collect a touch or non-touch operation performed by a user on or near the touch panel 111 (for example, an operation performed by the user on or near the touch panel 111 by using any proper object or accessory, such as a finger or a stylus, or may include a motion sensing operation, where the operation includes an operation type such as a single-point control operation and a multi-point control operation), and drive a corresponding connecting apparatus according to a preset program. It should be noted that the touch panel 111 may alternatively include two parts: a touch detection apparatus and a touch controller. The touch detection apparatus detects a touch position and a posture that are of the user, detects a signal generated by a touch operation, and transmits the signal to the touch controller. The touch controller receives touch information from the touch detection apparatus, converts the touch information into information that can be processed by the processor 101, and sends the information to the processor 101, and is also capable of receiving and executing a command sent by the processor 101. In addition, the touch panel 111 may be implemented by using a plurality of types, such as a resistive type, a capacitive type, an infrared type, and a surface acoustic wave type, and the touch panel 111 may be alternatively implemented by using any technology developed in the future. Generally, the touch panel 111 may cover the display panel 112. The user may perform, based on content displayed by the display panel 112 (the displayed content includes but is not limited to a soft keyboard, a virtual mouse, a virtual key, and an icon), an operation on or near the touch panel 111 that covers the display panel 112. After detecting an operation on or near the touch panel 111, the touch panel 111 transmits information about the operation to the processor 101 to determine user input, and then, the processor 101 provides corresponding visual output on the display panel 112 based on the user input. In FIG. 1, the touch panel 111 and the display panel 112 are used as two independent components to implement input and output functions of the terminal 100. However, in some implementations, the touch panel 111 and the display panel 112 may be integrated to implement the input and output functions of the terminal 100.

The RF circuit 104, the loudspeaker 106, and the microphone 107 can provide an audio interface between the user and the terminal 100. The audio circuit 105 may transmit, to the loudspeaker 106, a signal that is obtained after conversion of received audio data, and the loudspeaker 106 converts the signal into a sound signal and outputs the sound signal. In addition, the microphone 107 may convert a collected sound signal into a signal; the audio circuit 105 receives the signal, converts the signal into audio data, and outputs the audio data to the RF circuit 104; and then, the audio data is sent to, for example, another terminal device, or the audio data is output to the memory 102, so that the processor 101 performs further processing in combination with content stored in the memory 102. In addition, the camera 103 may capture an image frame in real time, and send the image frame to the processor 101 for processing. A processing result is stored in the memory 102, and/or the processing result is presented to the user by using the display panel 112.

The processor 101 is a control center of the terminal 100, is connected to all the parts of the entire terminal 100 by using various interfaces and lines, and by running or executing the software program and/or the module that are/is stored in the memory 102 and by invoking data stored in the memory 102, performs various functions and data processing of the terminal 100, to perform overall monitoring on the terminal 100. It should be noted that the processor 101 may include one or more processing units, and further, an application processor and a modem processor may be integrated into the processor 101, where the application processor mainly processes an operating system, a user interface (User Interface, UI), an application program, and the like, and the modem processor mainly processes wireless communication. It may be understood that the foregoing modem processor may be alternatively not integrated in the processor 101.

The terminal 100 may further include the power supply 114 (for example, a battery) that supplies power to all the components. In the implementations of the present disclosure, the power supply 114 may be logically connected to the processor 101 by using a power management system, so that functions such as charging and discharging management and power consumption management are implemented by using the power management system.

In addition, the terminal 100 may further include components that are not shown in FIG. 1, for example, a Bluetooth module. Details are not described herein.

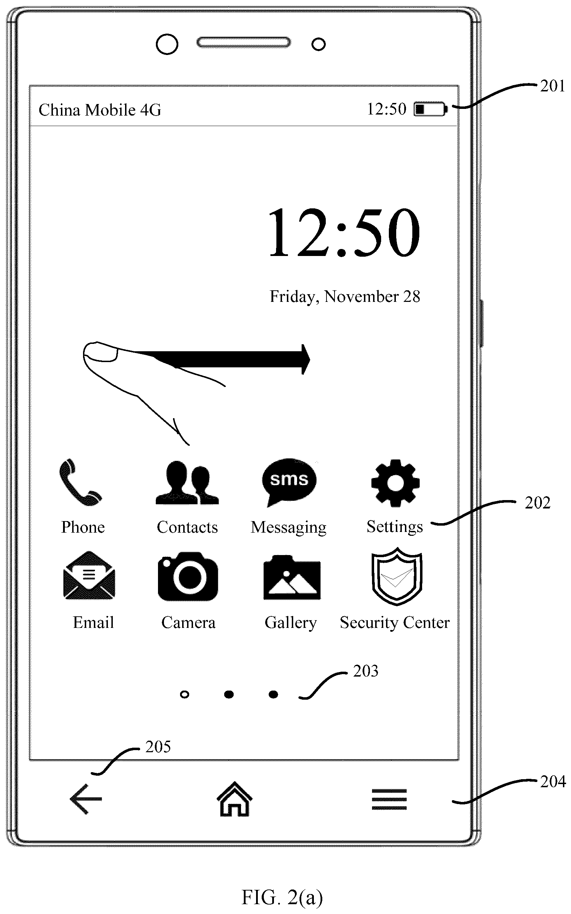

The following uses a mobile phone as an example to describe an icon management method provided in an implementation of the present disclosure. FIG. 2(a) to FIG. 2(c) are schematic diagrams of display screens in the mobile phone.

FIG. 2(a) is used as an example. Function keys are provided in the lower section of a mobile phone screen to facilitate performing of some commonly used functions by a user. For example, a touch key in a pattern of "arrow", that is, a return key, is provided on the far left. The user can roll back a display screen by touching the return key. For example, the user enters a home screen of email by touching an icon named email, and then, if the user touches the return key, a current display screen is rolled back from the home screen of email to a display screen shown in FIG. 2(a). For another example, a touch key in a pattern of "three parallel lines" is provided on the far right. The user can zoom and display, by touching the touch key, all screens currently running on both a foreground and a background of the mobile phone, and then, shut down an application program corresponding to a running interface by holding and flicking the interface upwards, thereby implementing management of parallel application programs. For another example, a touch key in a pattern of "house" is provided in the middle. The user can directly return to a home screen of the mobile phone by touching the touch key. For example, the user is currently checking a short message, and as long as the user touches the touch key, the mobile phone directly presents a home screen of the mobile phone.

It should be noted that in this implementation of the present disclosure, the mobile phone in the foregoing form is used as an example for description, but the foregoing form does not constitute a limitation on a mobile phone form in the implementations of the present disclosure.

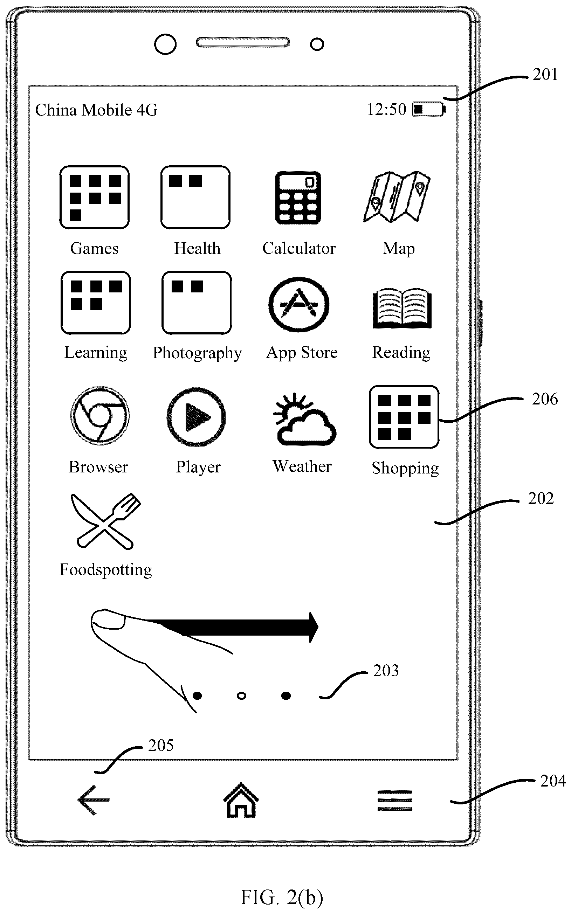

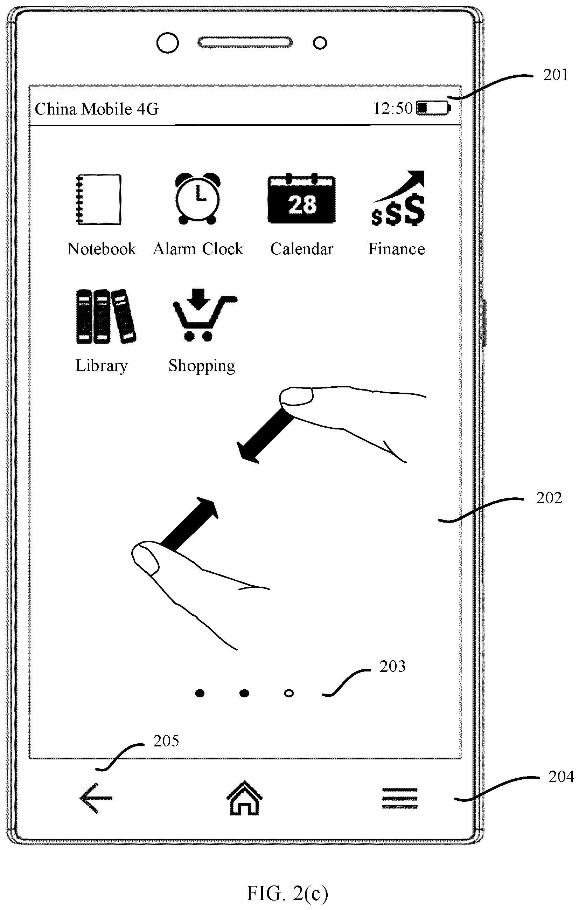

The following further describes this implementation of the present disclosure with reference to the accompanying drawings. FIG. 2(a) to FIG. 2(c) are schematic diagrams of home screens of the mobile phone. FIG. 2(b) is used as an example. A current display screen 202 of a mobile phone screen includes basic information 201, a screen paging mark 203, and a folder 206. The basic information 201 includes but is not limited to a current battery level of the mobile phone, a current time, and a current network connection status of the mobile phone. The screen paging mark 203 is used to identify a page number of a currently displayed home screen. For example, a current display screen shown in FIG. 2(b) is the second page of the home screen of the mobile phone. The folder 206 includes icons of at least two application programs. As shown in FIG. 2(c), function keys 204 are further provided in the lower section of the mobile phone screen. The function keys 204 include but are not limited to a return key 205.

In addition, a plurality of home screens may exist in the mobile phone. For example, in FIG. 2(a), the mobile phone has three home screens. It can be learned based on the interface paging mark in FIG. 2(a) that a white-filled circle is a home screen currently presented to the user by the mobile phone, that is, the first page of the three home screens. Similarly, a black-filled circle may be regarded as a home screen currently not presented to the user by the mobile phone, that is, the second and third pages on the three home screens. The user may touch a blank area in a display screen and flick the home screen to the left or right, to switch between the three home screens. Details are not described herein.

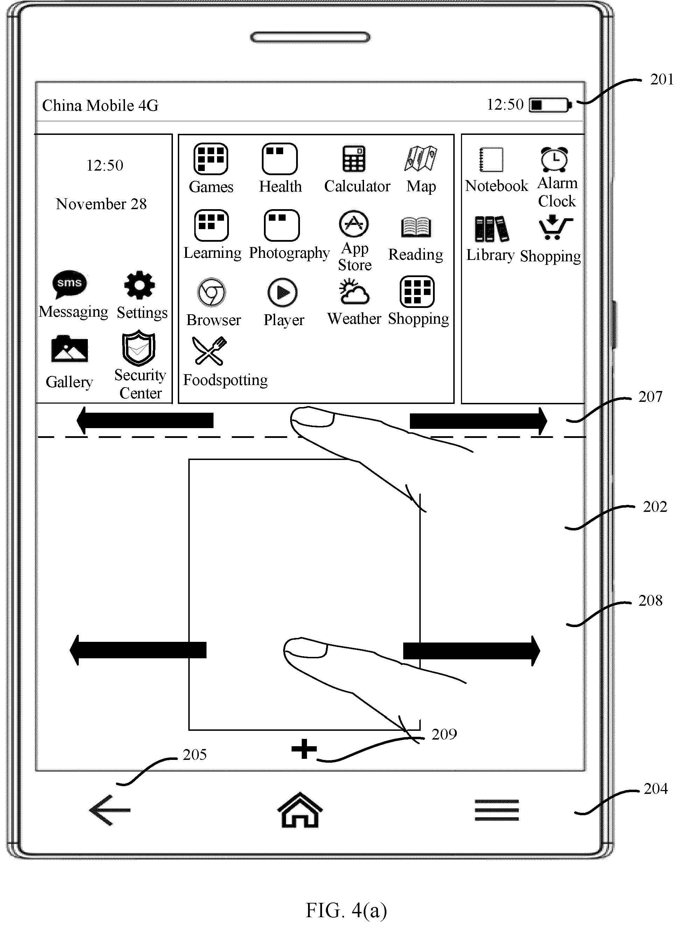

FIG. 2(c) is a schematic diagram of a display screen obtained after the user enters an icon management operation. The icon management operation is used to trigger the mobile phone to implement an interface switch, that is, trigger the mobile phone to start an icon management function and display an icon management interface, for example, switching from a display screen shown in FIG. 2(c) to an icon management interface shown in FIG. 4(a). As shown in FIG. 2(c), the user may enter the icon management interface by performing a pinch-to-zoom-out operation on a screen. The pinch-to-zoom-out operation is performed as follows: The user presses two different positions on a screen with two fingers, and with a center point of the two different positions as a direction of a flick operation, flicks the two pressing fingers toward the center point, to implement the pinch-to-zoom-out operation. A motion trajectory of the operation may be directions of arrows shown in FIG. 2(c). The icon management interface is an interface in which the user may perform an operation such as moving or deletion on an icon in the home screen of the mobile phone by performing an operation such as touching or flicking. The touch operation includes but is not limited to a touch operation, a double-touch operation, and a touch and hold operation. The touch and hold operation means that a finger of the user touches a screen for a period of time. A length of the period of time may be set by the user in advance based on an empirical value, or may be specified at factory. A manner of setting the period of time, a time at which the period of time is set, and the like are not limited herein.

The pinch-to-zoom-out operation of the user on the mobile phone is used as an example. With reference to a schematic structural diagram shown in FIG. 1, the mobile phone can recognize the pinch-to-zoom-out operation by using the input device 108. For example, the mobile phone can recognize, by using a sensor disposed in the mobile phone, a touch operation of the user on the screen and a subsequent flick operation of a finger of the user on the screen. For a specific manner of recognition, refer to prior-art recognition processes involved in image zoom-in, image zoom-out, and the like. Details are not described herein. Then, the input device sends, to the processor 101, an instruction corresponding to the pinch-to-zoom-out operation to enter the icon management interface. The processor 101 sends the instruction to an operating system. After the operating system recognizes that the user performs the pinch-to-zoom-out operation when a display screen is a home screen of the mobile phone, the operating system saves current presentation statuses of the home screens of the mobile phone to a memory. The presentation statuses are used to indicate a sequence of adjacent home screens and a layout of icons in a single home screen. In this implementation of the present disclosure, the presentation statuses include but are not limited to a quantity of pages on the home screen, an arrangement order of the home screens, positions of icons in a single home screen, and presentation effects of icons in a single screen. This is not limited herein. Then, the operating system instructs the output device 113 to display the icon management interface. When the operating system is instructing the output device 113 to display the icon management interface, the operating system also needs to send the presentation statuses of the home screens of the mobile phone to the output device 113, so that the output device 113 can accurately restore a sequence of adjacent home screens and a layout of icons in a single home screen when outputting the icon management interface. Then, when the mobile phone is in a portrait mode, the output device 113 displays the icon management interface in separate panes in a manner of displaying upper and lower display windows, for example, the screen shown in FIG. 4(a). It also means that a first display window and a second display window are displayed in separate panes in the icon management interface. In this implementation of the present disclosure, a screen splitting manner of the icon management interface includes but is not limited to left-right screen splitting or top-bottom screen splitting. For example, when the mobile phone is in a portrait mode, the first display window and the second display window are displayed in the top-bottom screen splitting manner in the icon management interface, and the first display window is located above or below the second display window. When the mobile phone is in a landscape mode, the first display window and the second display window are displayed in the left-right screen splitting manner in the icon management interface, and the first display window is located on the left or right of the second display window.

It should be noted that a process of managing icons by the user is to perform organizing and deletion operations on icons in the home screen of the mobile phone. Therefore, the user usually may trigger the operation only when a display screen of the mobile phone is a home screen. To reduce a quantity of occurrences in which the icon management interface is falsely triggered, in this implementation of the present disclosure, the icon management interface is displayed only when the operating system recognizes that the icon management operation of the user is performed on a home screen of the mobile phone. In addition, if an arrangement order of the home screens and icon distribution in the home screens are changed, the mobile phone may restore previous presentation statuses of the home screens and the previous arrangement order of the home screens according to the presentation statuses of the home screens that are saved in the memory.

It should be noted that a manner of triggering the icon management interface is not limited to the foregoing icon management operation such as the pinch-to-zoom-out operation. The icon management operation may be alternatively implemented as a pinch-to-zoom-in operation. In other words, the user presses two different positions on a screen with two fingers, and with a center point of the two different positions as an opposite direction of a flick operation, flicks the two pressing fingers toward positions far from the center point, to implement the pinch-to-zoom-in operation. The zoom-out operation or the zoom-in operation may be implemented not only by using two fingers, and may be implemented by using three fingers or the like. This is not limited herein. Certainly, the user may alternatively enter a desktop management status by double-touching a blank area in a current display screen. In this case, the double-touch operation performed by the user in the blank area in the current display screen is the icon management operation. Alternatively, the user may enter a desktop management status by holding down an existing hardware key or pressing an existing hardware key for a plurality of times. In this case, the operation of holding down an existing hardware key or pressing an existing hardware key for a plurality of times is the icon management operation. This is not limited herein. The blank area is a position, in a display screen, by double-touching which another operation other than entering the desktop management status is not triggered, for example, a position in which no application program icon exists.

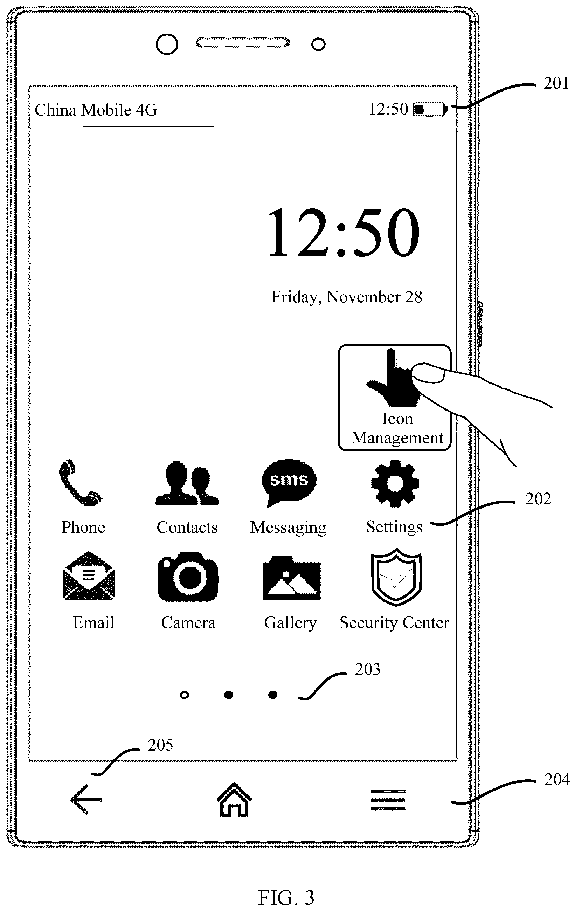

In addition to the foregoing possible cases, an icon or a key configured for implementing icon management may be alternatively presented to the user in a home screen of the mobile phone, to facilitate performing of an operation by a user. An icon is used as an example, as shown in FIG. 3. The user may enter the icon management interface by touching the icon, to implement management of icons in the home screen of the mobile phone. It should be noted that a position of the icon configured for implementing icon management, a presentation form of the icon, a name corresponding to the icon, and the like may be set at factory, or may be set or adjusted by the user based on a personal preference. This is not limited herein.

The following uses FIG. 4(a) to FIG. 4(e) as examples to describe a process in which the user implements icon management in the icon management interface. Icon management includes but is not limited to management of an icon of an existing application program and an icon of an existing folder. Certainly, in a management process, a plurality of icons may be used as a set to create a folder, or one or more icons may be added to an existing folder. Alternatively, one or more folders may be merged with an existing folder. In this case, icons in the one or more folders may be merged into the existing folder in one batch.

For example, as shown in FIG. 4(a), a display screen of the mobile phone is divided into an upper section and a lower section, that is, an upper display window and a lower display window. A display window located in the upper section, that is, a first editing area 207, is used to present the home screens of the mobile phone. A display window located in the lower section, that is, a second editing area 208, is used to present a generated new screen. The icon management operation can enable a display screen of the mobile phone to switch to the icon management interface. In addition, the user is allowed to perform an operation, such as moving and deletion, on an icon in the icon management interface.

In this implementation of the present disclosure, the user can perform an operation separately in the first editing area or in the second editing area. For example, the user can flick left and right in the first editing area to browse the home screen. Likewise, the user can flick left and right in the second editing area to browse the second editing area.

It should be noted that if the mobile phone is in a landscape mode, the output device 113 may display the icon management interface in separate panes by displaying left and right display windows. In this case, the user can similarly perform an operation separately in two editing areas. For example, the user can flick up and down in a first editing area to browse the home screen. Similarly, the user can flick up and down in a second editing area to browse the second editing area.

In this implementation of the present disclosure, a manner of dividing the first editing area and the second editing area is not limited. In addition, proportions of the first editing area and the second editing area in the display screen are not limited. By default, the first editing area and the second editing area each occupy half of the display screen. Certainly, the user may perform manual adjustment based on a preference of the user. For example, the user may adjust allocation of the first editing area and the second editing area by touching and holding a dashed line, as shown in FIG. 4(a), that is used for allocating the first editing area and the second editing area moving the dashed line upward or downward, and lifting the finger off the screen. In this case, the mobile phone can recognize, by using the input device 108, that a press operation exists in an area in which the dashed line is located, and the press operation ends after displacement is resulted. Then, the mobile phone may send the recognized operation to the processor 101. The processor 101 performs determining and processing, and then instructs the output device 113 to adjust the proportions of the first editing area and the second editing area in the display screen.

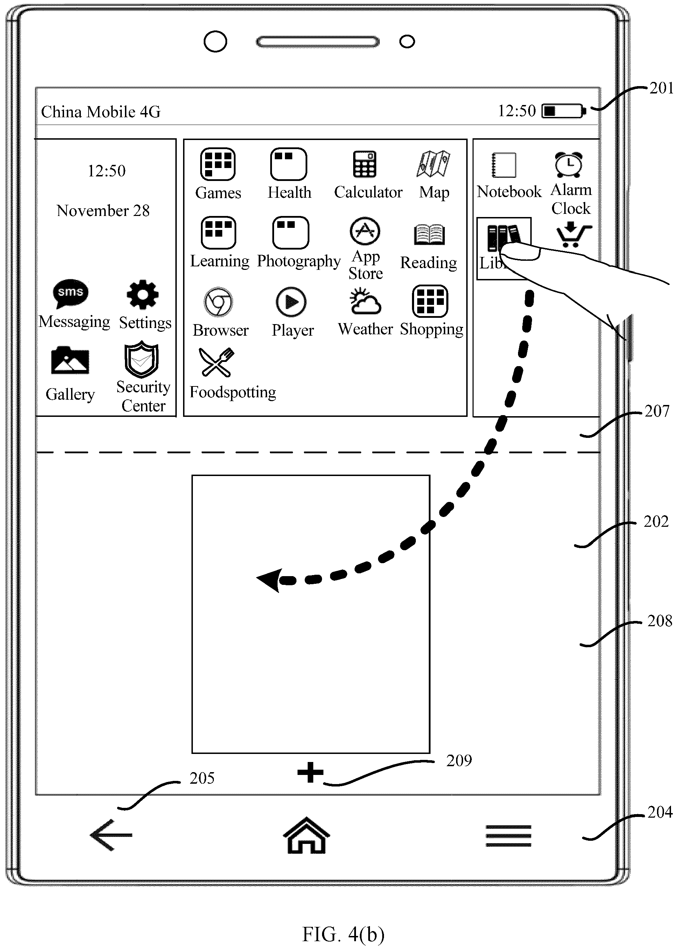

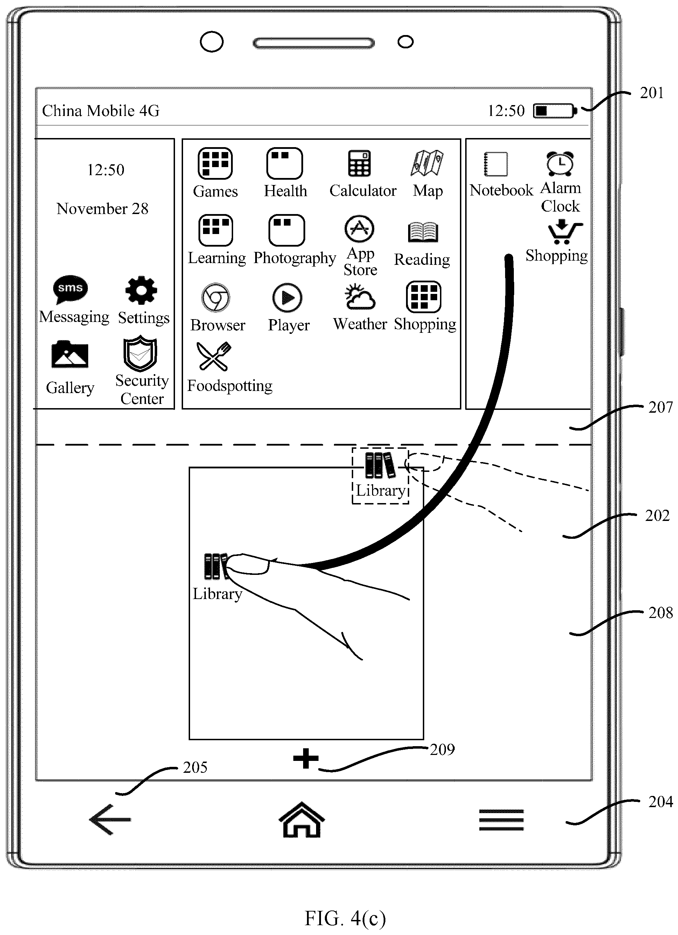

After entering the icon management interface, the user can enter an icon moving operation to implement moving of an icon between different screens. The display screen shown in FIG. 4(a) is used as an example. A new screen located in the second editing area may be used by the user to organize icons existing in the home screen. As shown in FIG. 4(b), the user can select an icon of an application program named "Library" by touching and holding the icon, flick the icon by following a trajectory indicated by a dashed-line arrow in the figure until reaching a position shown in FIG. 4(c), lift the finger, and keep the finger away from touching the screen. In this case, the icon is moved by the user from the third page of the home screen in the first editing area to the new screen in the second editing area.

It should be noted that as shown in FIG. 4(c), when the user is moving the icon, the mobile phone presents an animation of the process of moving the icon, that is, presents the moving process of the icon in real time, so that the user has a more intuitive visual experience. Certainly, a manner of moving an icon by the user may be alternatively implemented as selecting, by the user by touching, an icon that needs to be moved, and then touching a specific position in the new screen in the second editing area, to implement moving of the icon to the specific position. In this moving process, an animation of the process of moving the icon is selectively presented to the user.

With reference to the schematic structural diagram shown in FIG. 1, the mobile phone can consider, by using the input device 108, the operation of touching and holding the icon by the user and flicking the icon on the screen as the icon moving operation. After receiving the icon moving operation, the mobile phone transfers an instruction corresponding to the icon moving operation to the processor 101. Then, the processor 101 sends the instruction to the operating system for processing. Then, the operating system sends a result of the processing to the output device 113. In other words, the output device 113 selectively presents the animation of the icon moving process, and presents the moved icon in a position in which the user ends the icon moving operation.

It should be noted that the foregoing possible manner of moving an icon is used only as an example, and does not constitute a limitation on this implementation of the present disclosure. Certainly, the user may not only move one icon at a time, but also adjust positions of a plurality of icons by selecting and moving them together. This is not limited herein.

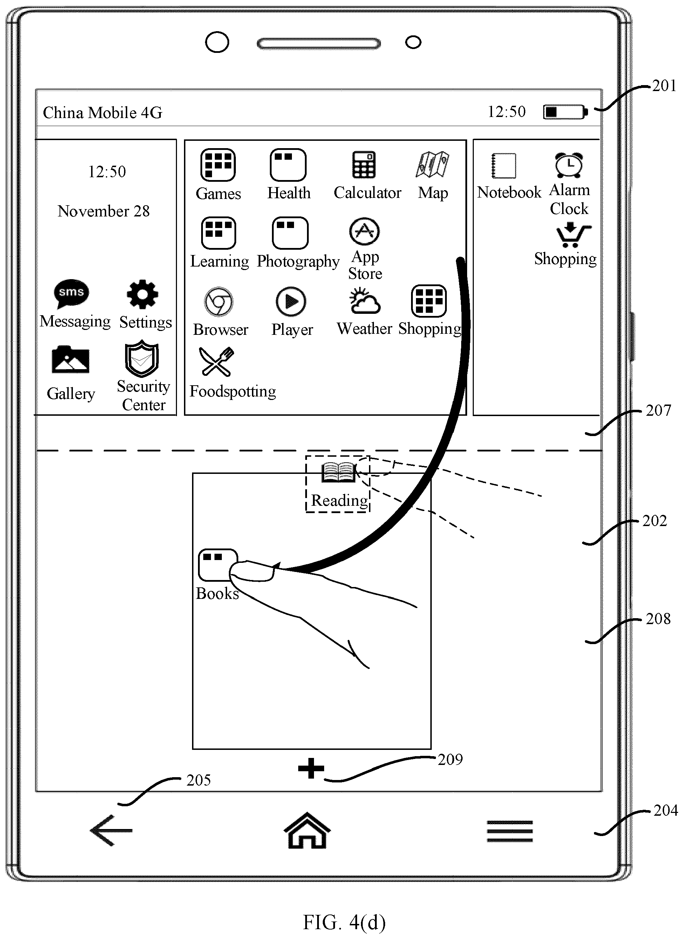

To further facilitate management of an icon by the user, the user is allowed to create a folder for the icon in an icon moving process. For example, as shown in FIG. 4(d), when the icon named "Library" already exists in the new screen, the user moves an icon named "Reading" in the second page of the home screen over the icon named "Library", and lifts the finger off the screen. In this case, the mobile phone recognizes, by using the input device 108, the operation of moving the icon named "Reading" by the user, and recognizes that when the finger of the user leaves the screen, the icon named "Reading" is in an area in which the icon named "Library" is located. The input device 108 may send the recognized icon moving operation to the processor 101. In addition, because there is an existing icon in the position to which the icon is finally moved, the input device 108 may consider that the user not only enters the icon moving operation, but also enters a folder creation operation in the position because there is an existing icon in the position in which the icon moving operation ends. In this case, the input device 108 then sends the folder creation operation to the processor 101. In this case, the processor 101 needs to process not only the icon moving operation but also the folder creation operation. To improve a visual effect for the user, in a process of instructing the output device 113 to output effects of moving the icon and creating a folder, the processor 101 prompts the output device 113 to simultaneously present two effects corresponding to the two operations. In other words, the output device 113 generates a new folder in the position in which the icon named "Library" is located, and places the icon named "Library" and the icon named "Reading" in the new folder.

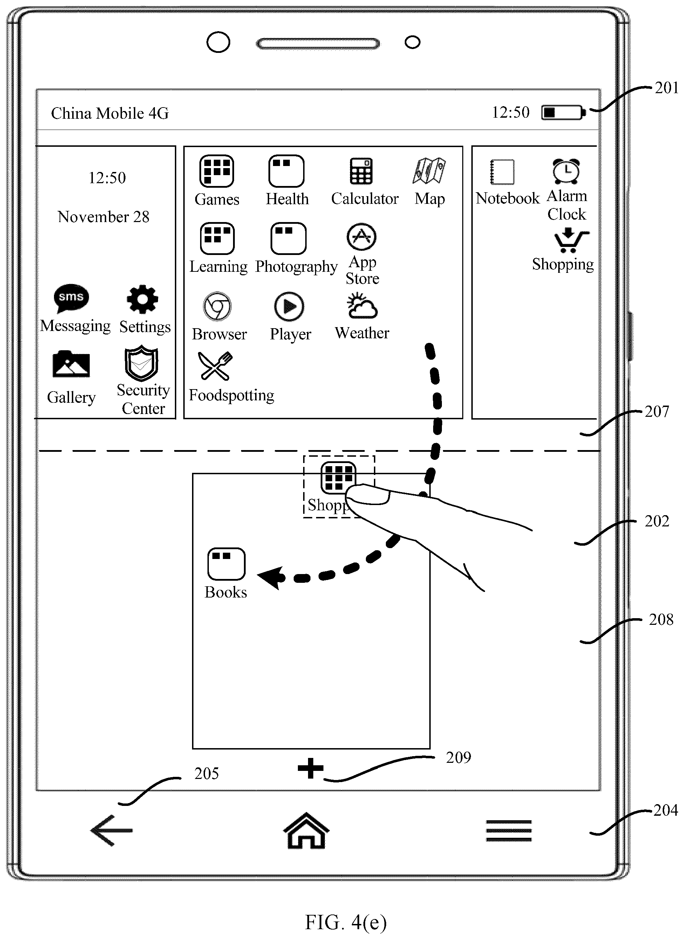

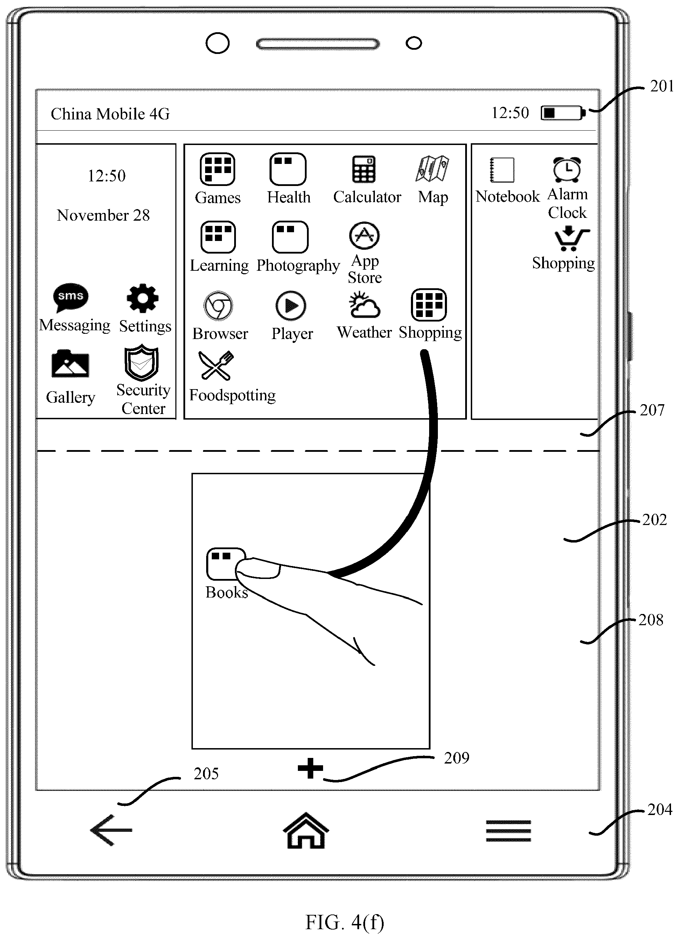

It should be noted that if the user moves a folder instead of a single icon in the foregoing manner, as shown in FIG. 4(e), when the finger of the user leaves the screen, the folder that the user attempts to move goes back to a position in which the folder is located, as shown in FIG. 4(f). In other words, the input device 108 recognizes the icon moving operation entered by the user. However, when the icon moving operation is sent to the processor 101 for processing, the processor 101 finds that the icon moving operation actually intends to move a folder and that an existing folder exists in a destination position corresponding to the icon moving operation. In this case, the processor 101 may consider that the operation of moving one folder to another folder by the user is a misoperation, and then notify the output device 113 that the operation does not cause the icon or folder to move. In this case, content presented by the output device 113 is the same as content existing before the icon moving operation is performed.

However, the user may have a requirement of merging two or a plurality of folders. In this implementation of the present disclosure, if the user repeats the foregoing operation for the second time, that is, moves the same folder to the another folder once again, the mobile phone may merge the two folders, that is, add an application in the moved folder to the another folder. In this case, the another folder retains an original naming manner, and the mobile phone may selectively prompt the user that the user may rename the another folder, or the like. In the mobile phone, a counter may be further disposed to count a quantity of times the input device 108 receives operations that are exactly the same. For example, if the recorded icon moving operations are actually a repetitive operation to be performed on a same folder, the mobile phone feeds back "2" recorded by the counter to the processor 101. Then, the processor 101 may transfer a processing result of the icon moving operation to the output device 113. Then, the output device 113 presents a result of merging the two folders.

To further facilitate merging of a plurality of folders by the user, in this implementation of the present disclosure, the user may alternatively configure the mobile phone in advance, that is, turn on a function about folder merge in an icon management rule. When this function is turned on, the user can complete an operation of merging two folders when moving one folder to another folder for the first time. The function may be configured in a settings interface of the mobile phone. For a manner of configuration, refer to a manner of configuring whether to turn on a wireless network function in the prior art. Details are not described herein.

Certainly, a function of preventing folder merging from occurring due to a misoperation may be alternatively configured at factory.

It should be noted that in an icon or folder moving process, if press and flick operations of the user finally move an icon or folder to a blank area other than the home screen and the new screen in the display screen, the processor 101 considers, when processing the foregoing operations recognized by the input device 108, that the current operations of the user are misoperations or that the user currently wishes to cancel current moving of the icon or folder. In this case, the processor 101 does not instruct the output device 113 to present an effect of successful moving. In other words, the processor 101 instructs the output device 113 to present a presentation result existing before the icon moving operation is performed. That is, the icon or folder is not successfully moved, but stays in a position in which the icon or folder is located before being moved.

In addition, moving of an icon or a folder may be moving, by the user, an icon or a folder located in a home screen in the first editing area to the new screen located in the second editing area, moving, by the user, an icon or a folder located in a home screen in the first editing area between the home screens located in the first editing area, moving, by the user, an icon or a folder located in the new screen in the second editing area to a home screen located in the first editing area, or moving, by the user, an icon or a folder located in the new screen in the second editing area between new screens located in the second editing area. In other words, both an icon and a folder can move not only between screens in a single editing area but also between screens in the two editing areas. This is not limited herein.

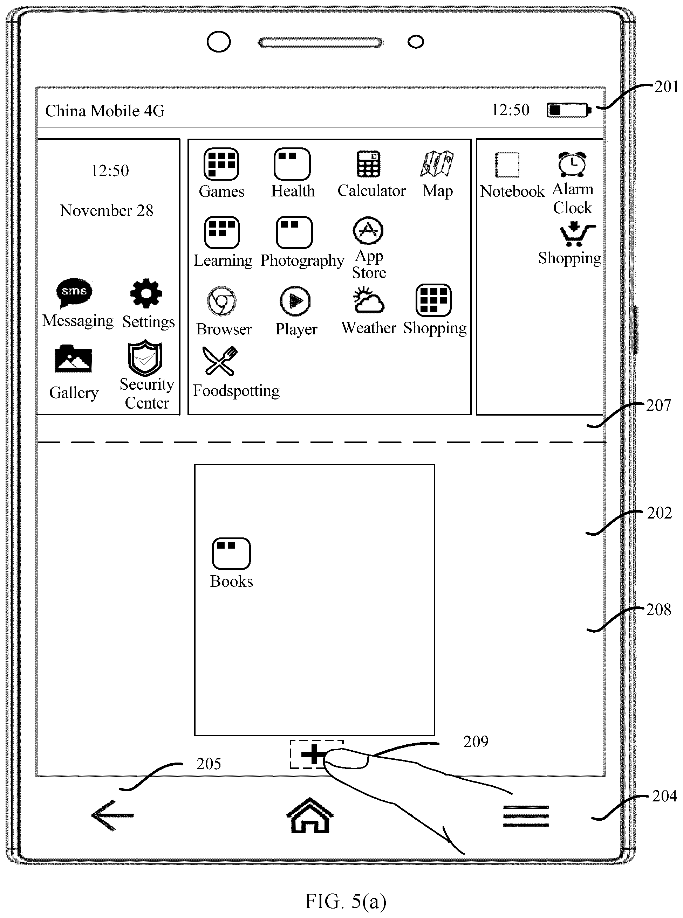

During execution of the icon moving operation shown in FIG. 4(a) to FIG. 4(f), or before or after the execution, the user may need, in an icon organizing process, more new screens for organizing purposes. In this case, the user may touch a screen addition key 209 to add a new screen to the second editing area, as shown in FIG. 5(a). In other words, the input device 108 recognizes the screen addition operation entered by the user. After receiving the screen addition operation recognized by the input device 108, the processor 101 processes the operation and instructs the output device 113 to present an added new screen. A purpose of the screen addition operation is to add a screen to the second editing area, for the user to execute an icon management process and the like in the newly added screen.

It should be noted that the screen addition operation may be implemented as performing, by the user, an operation such as touching and flicking on the key used for adding a new screen. Certainly, the key may be alternatively implemented in another form, and a setting position of the key is not limited to the foregoing case. The position of the key may alternatively be any position that is in the first or second editing area and that does not hinder a user operation, that is, does not cause the user to falsely trigger another operation. If the key is set in the first editing area, the user may be notified of the key, in a form such as text annotation, that the key is used to perform an operation on the second editing area. In addition, a manner of triggering adding a new screen to the second editing area includes but is not limited to the foregoing manner of setting a key. The user may alternatively add a new screen to the second editing area in a manner such as double-touching or touching and holding a blank area other than a screen in the second editing area. This is not limited herein.

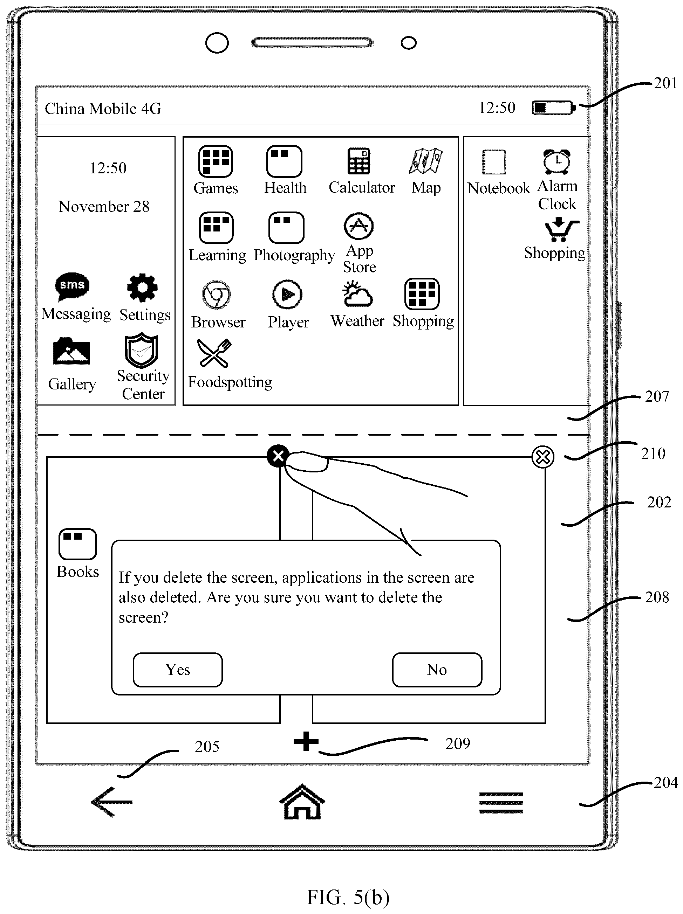

As shown in FIG. 5(b), a screen deletion key 210 is provided in an upper right corner in the new screen in the second editing area. The user may touch the key to delete a screen in which the key is located. The input device 108 may recognize an operation of touching the key by the user as a screen deletion operation entered by the user. Then, the input device 108 sends the screen deletion operation to the processor 101 for processing. After completing the processing, the processor 101 instructs the output device 113 to present a presentation effect existing after the screen is deleted. It should be noted that for a blank new screen, the user may delete the screen directly in the foregoing manner. For a new screen including an icon or a folder, however, deletion of the screen often results in deletion of an application program or a folder. Therefore, to avoid loss to the user caused by deletion of an application program or a folder, in this implementation of the present disclosure, if the user attempts to delete a non-blank screen, after recognizing that the screen that the user attempts to delete is a non-blank screen, the processor 101 may instruct the output device 113 to pop up a dialog box, to prompt the user that "if you delete the screen, applications in the screen are also deleted", ask the user if the user needs to continue to delete the screen, and determine, based on a touch operation of the user, whether to delete the screen and the application program and folder that are located in the screen. In this implementation of the present disclosure, deletion of an application includes but is not limited to uninstallation of the application. A deleted application is not be displayed in the home screen of the mobile phone. In other words, the user can no longer call the deleted application.

It should be noted that similar to the screen addition key, a form and a position of the screen deletion key are not limited herein. In addition, the screen deletion operation may be alternatively triggered by using another shortcut. The input screen addition operation and screen deletion operation entered by the user include but are not limited to the foregoing example operations. In addition, a manner in which the mobile phone prompts the user is also not limited to the foregoing manner of popping up a dialog box, and may alternatively be a manner in which the user can be prompted by a voice prompt or vibration.

To avoid an occurrence of false application deletion, in this implementation of the present disclosure, a key capable of inputting the screen deletion operation may be presented to the user only when no icon exists in a screen. It also means that for a non-blank interface, the user cannot perform the screen deletion operation on the interface. Certainly, this is only a possible implementation, and does not constitute a limitation on this implementation of the present disclosure.

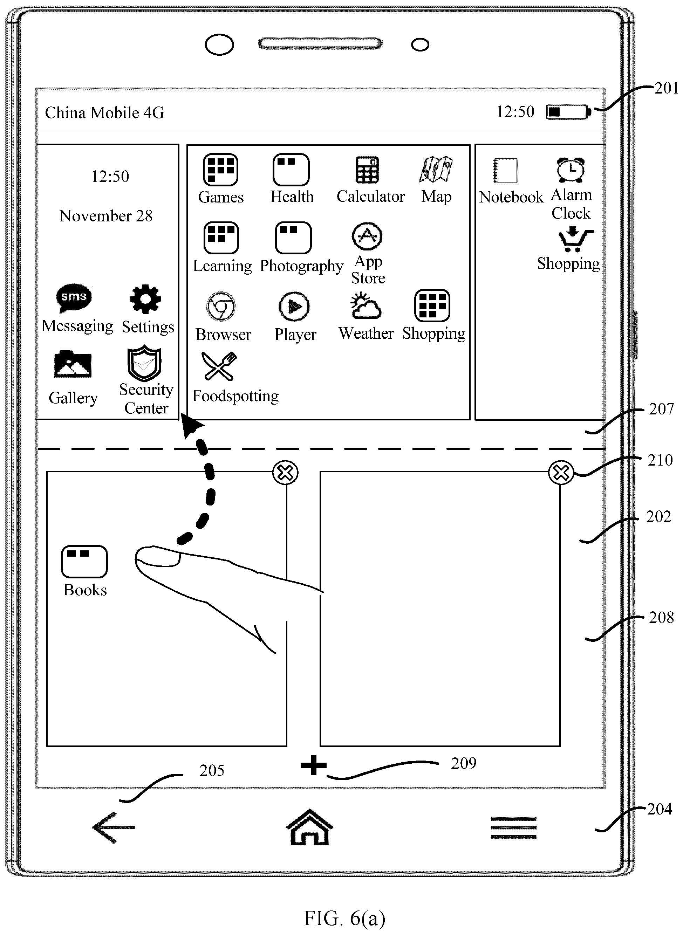

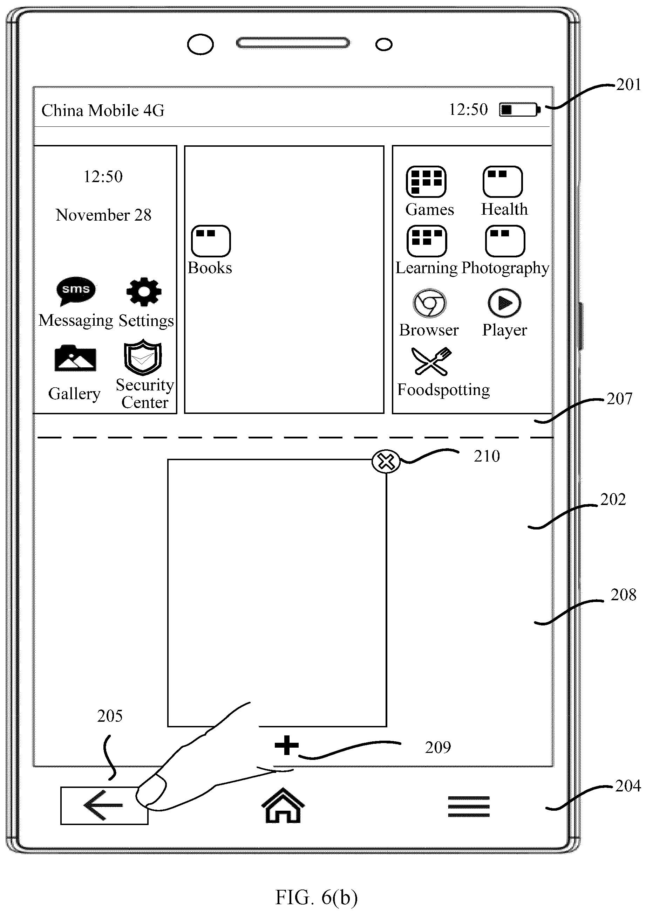

For the user, a new screen generated in the second editing area may not only provide an area for the user to organize icons and folders, but also be used as a newly added home screen. As shown in FIG. 6(a), the user may move the new screen from the second editing area to the first editing area by holding and dragging a blank area in the new screen. For example, the user may insert the new screen between two original adjacent home screens, or insert the new screen before the original first home screen or after the last home screen. FIG. 6(b) is a schematic diagram of an effect of the user inserting the first new screen between the first home screen and the second home screen. In addition, in a screen moving process, to improve a visual effect for the user, a display animation of dragging the screen is selectively presented to the user.

It should be noted that in this implementation of the present disclosure, a screen in the second editing area may be moved to the first editing area. In addition, a sequence of screens in a single editing area may also be adjusted. Certainly, a screen in the first editing area may also be moved to the second editing area. For a moving manner, refer to the foregoing implementation process. Details are not described herein again.

In a process shown in FIG. 4(a) to FIG. 4(f) and a process shown in FIG. 5(a) and FIG. 5(b), the user may move a screen in the second editing area to the first editing area at any time, for example, in a process shown in FIG. 6(a) and FIG. 6(b).

The input device 108 recognizes the operation of holding and dragging a blank area in the new screen in the second editing area, considers the operation as a screen moving operation, and sends an instruction corresponding to the operation to the processor 101. The processor 101 sends the instruction to the operating system. The operating system determines that the operation corresponding to the instruction is generated in the icon management interface, and the operating system instructs the output device 113 to display a moving process of a new screen indicated by the screen moving operation. In this case, the output device 113 selectively displays an animation in which the new screen moves along with a finger of the user. After the input device 108 recognizes that the user releases the finger to end the operation, the input device 108 sends, to the processor 101, an instruction corresponding to the operation of the finger of the user leaving the screen. The processor 101 sends the received instruction to the operating system. The operating system stores distribution of icons in the moved screen, and calculates a position in which the finger of the user leaves the screen. Then, the operating system creates a screen in the position in which the finger of the user leaves the screen and that is recognized by the input device 108, and the output device 113 displays the stored distribution of the icons in the newly created screen. In addition, the operating system instructs the output device 113 to display the new screen and delete the moved screen from an original position in the display screen. Subsequently, the output device 113 displays an operation result of the operating system.

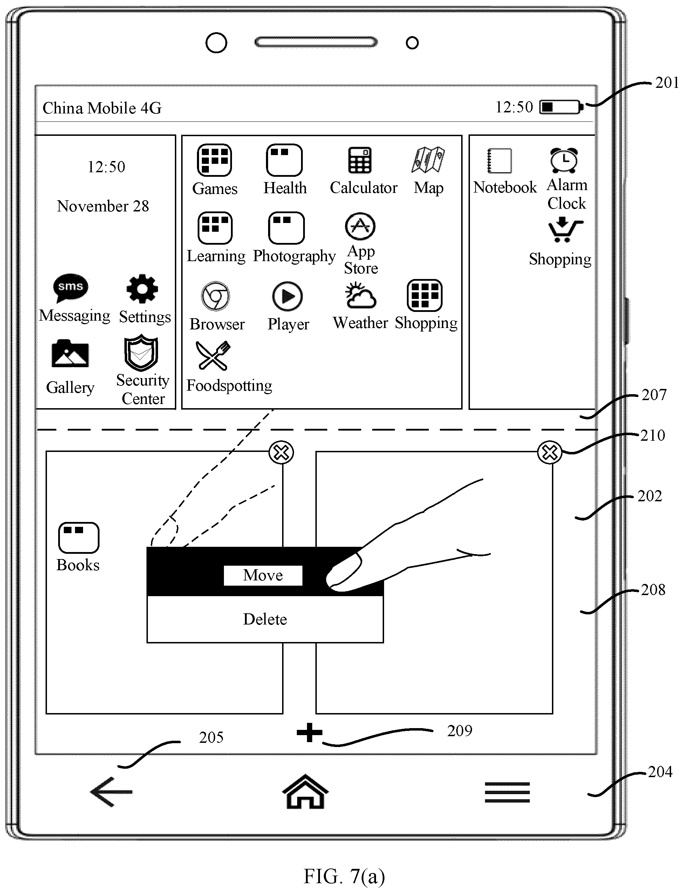

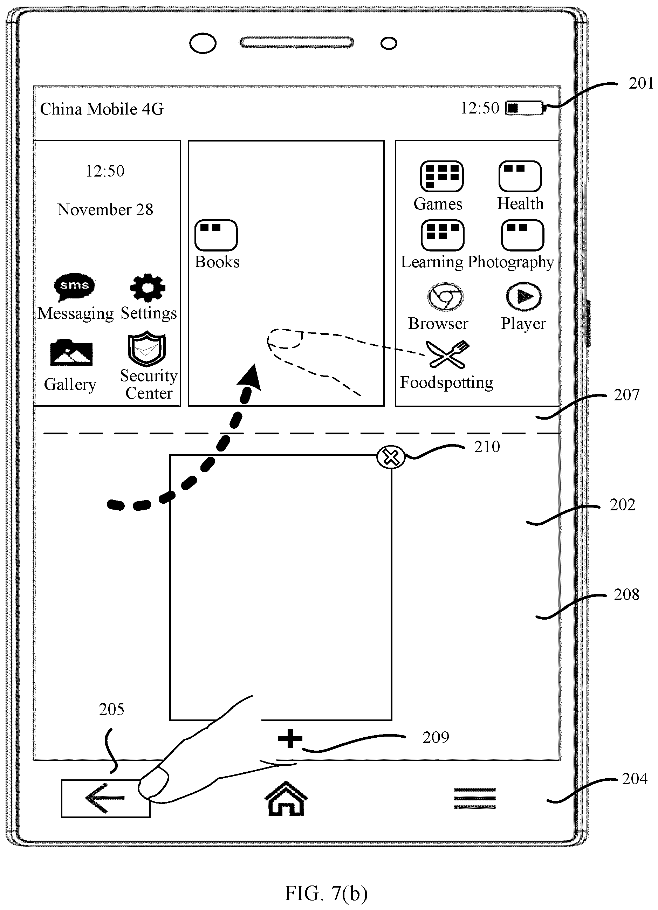

In addition to being implemented in an implementation shown in FIG. 6(a), the screen moving process may be alternatively implemented in an implementation shown in FIG. 7(a) and FIG. 7(b). In other words, the user may alternatively perform, by touching and holding or double-touching, an operation on a screen that needs to be moved. Then, the mobile phone may provide the user with an option by popping up a menu. For example, an option with a keyword such as move exists on a pop-up menu, or the option is "Move". Then, the user may touch the option to indicate that the screen needs to be moved currently, and then notify, directly by touching, flicking, or the like, the input device 108 of a position to which the screen is currently expected to be moved. After the input device 108 sends the screen moving operation to the processor 101, the processor 101 processes the operation in a manner similar to the foregoing manner of processing the screen moving operation, and instructs the output device 113 to perform displaying. For a specific implementation, refer to a description in the preceding paragraph. Details are not described herein again.

After the user completes an icon management process, the user may enter an icon management ending operation by touching, double-touching, or touching and holding the return key, to end the icon management process, as shown in FIG. 6(b). It should be noted that the foregoing implementation of ending the icon management process is only a possible implementation, and the user may alternatively end the icon management process by performing another operation. This is not limited herein.

For example, the user ends the icon management operation by touching the return key. After recognizing an operation of touching the return key, the input device 108 sends an instruction corresponding to the touch operation to the processor 101. Then, the processor 101 sends the instruction to the operating system. After the operating system determines that the operation corresponding to the instruction is generated in the icon management interface, the operating system stores a sequence of screens in the first editing area and the second editing area and distribution of icons in each screen. Then, the operating system instructs the output device 113 to display home screens existing after icon organizing is completed, to enable the output device 113 to exit the icon management interface and display the home screens existing after icon organizing is completed.

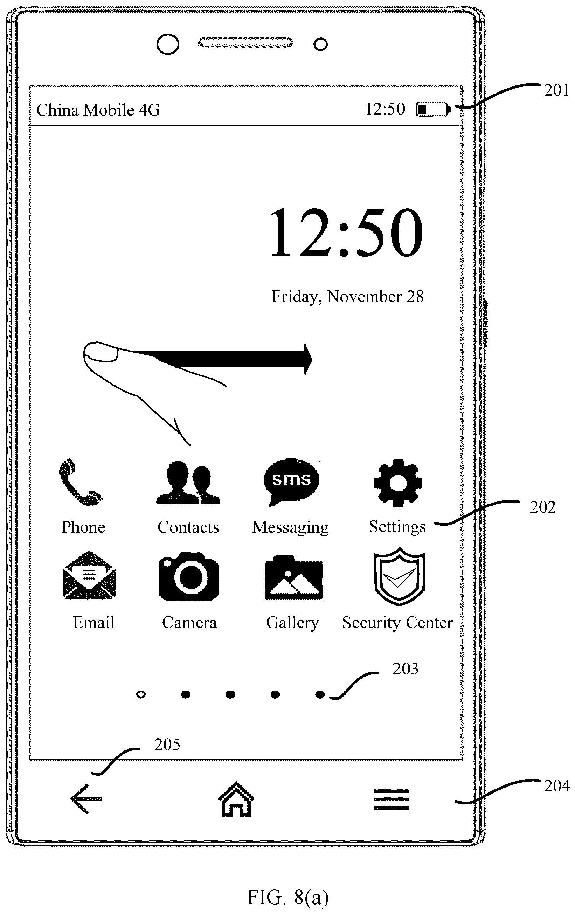

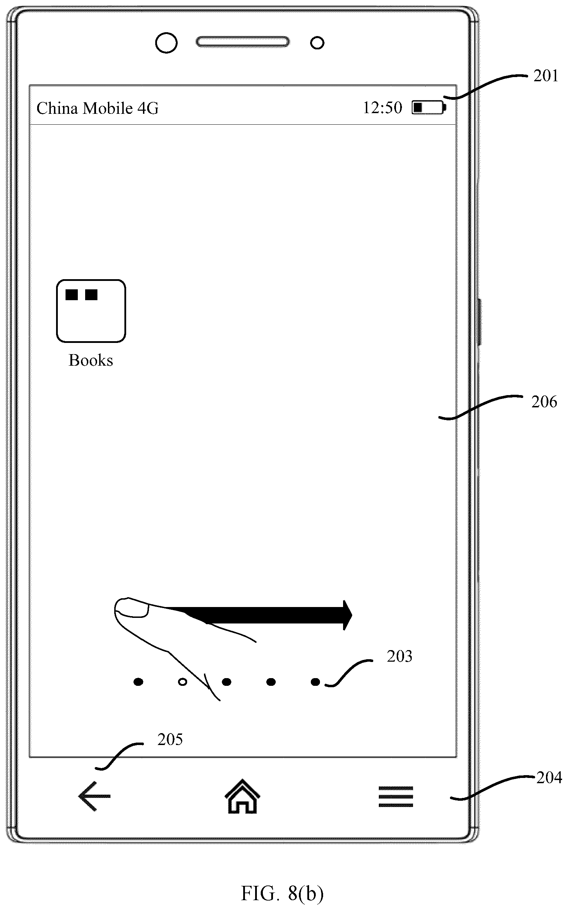

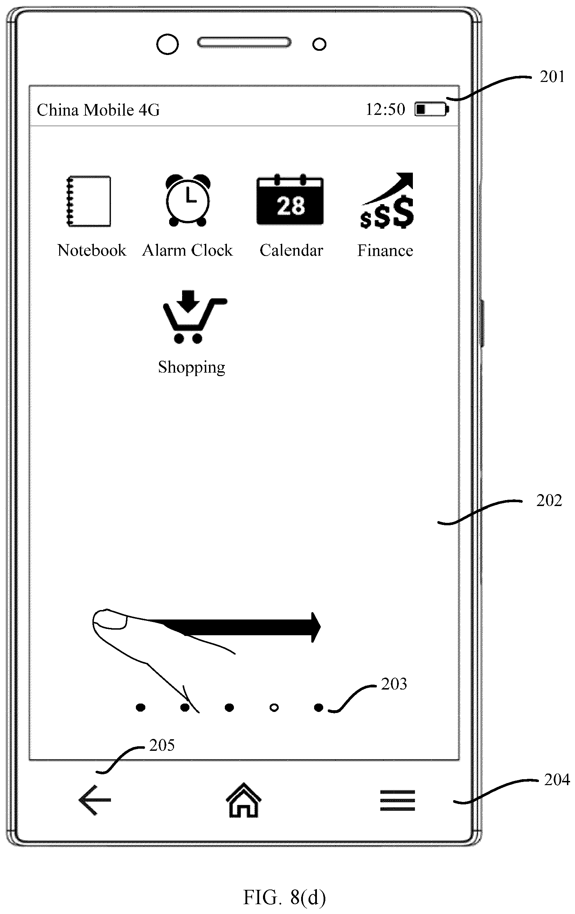

In this implementation of the present disclosure, after the user completes organizing icons, content of the home screens includes presentation content of each screen in the first editing area. If a screen exists in the second editing area, the screen located in the second editing area may be alternatively used as a part of the home screen of the mobile phone. For example, FIG. 6(b) shows content presented by a desktop management interface after the user completes organizing the icons. After exiting the icon management interface, the mobile phone presents a screen shown in FIG. 8(a) to the user by default, that is, the first page of the home screen of the mobile phone.

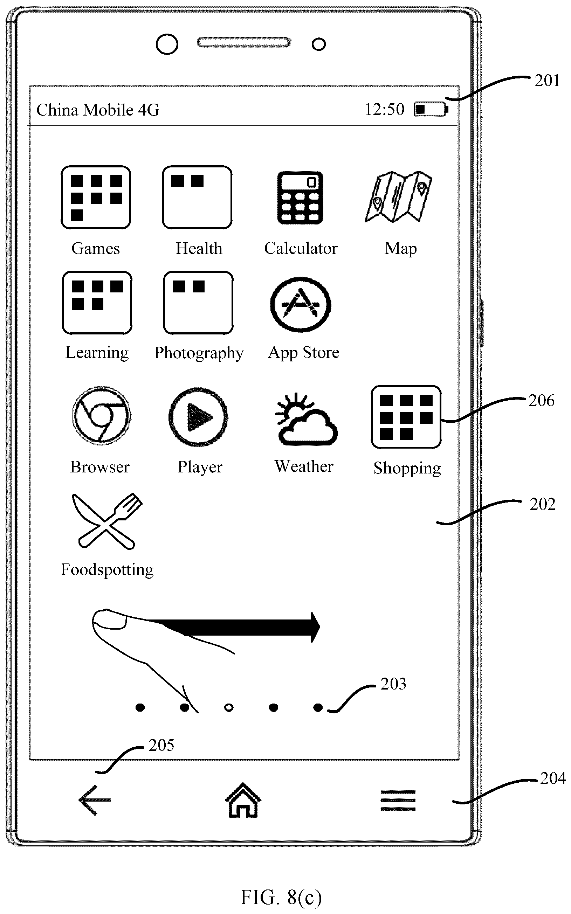

It should be noted that when exiting the icon management interface, the mobile phone may directly return to the home screen in which the icon management interface is started. For example, if the user triggers icon management in the home screen shown in FIG. 2(b), a home screen shown in FIG. 8(c) may be presented to the user when the mobile phone exits the icon management interface. Certainly, a display screen may alternatively switch to any home screen of the mobile phone according to another rule. This is not limited herein.

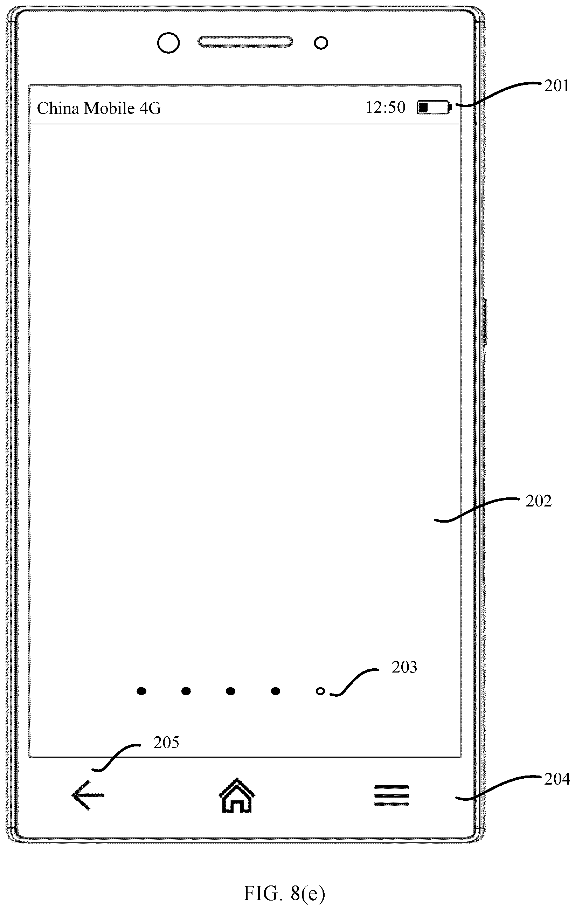

FIG. 8(a) to FIG. 8(e) show home screens existing after icon management is performed. FIG. 8(a) to FIG. 8(d) show content located in the first editing area in the desktop management interface. FIG. 8(e) shows content located in the second editing area in the desktop management interface.

It should be noted that the input device 108 can recognize an input operation of the user with reference to content collected by a sensor in the mobile phone. The sensor includes but is not limited to a pressure sensor and an infrared sensor. The output device 113 may be implemented as the display panel 112, to implement presentation of interfaces.

In conclusion, when managing an icon, the user may manage icons and folders presented in all the home screens together. In addition, to implement classified management for icons, the user may create a folder in a management process, and a process of creating the folder may be implemented in an icon moving process. Besides, the user may not only adjust an arrangement order of existing home screens but also manually create a home screen or delete an original home screen. The management process can more intuitively present a post-adjustment preview interface to the user in real time. In other words, the user can learn from the desktop management interface about statuses of the home screens presented to the user by the mobile phone after icon management is completed.

An icon management apparatus may be disposed in the foregoing terminal. To perform the foregoing functions, the icon management apparatus includes a corresponding hardware structure and/or a corresponding software module that perform/performs the functions. A person of ordinary skill in the art should easily be aware that, in combination with the examples described in the implementations disclosed in this specification, units and algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present disclosure.

In this implementation of the present disclosure, functional module division may be performed on the icon management apparatus based on the foregoing method examples. For example, functional module division may be performed in correspondence to functions, or at least two functions may be integrated into one processing module. The integrated module may be implemented in a form of hardware, or may be implemented in a form of a software functional module. It should be noted that, in this implementation of the present disclosure, module division is an example, and is merely a logical function division. In actual implementation, another division manner may be used.

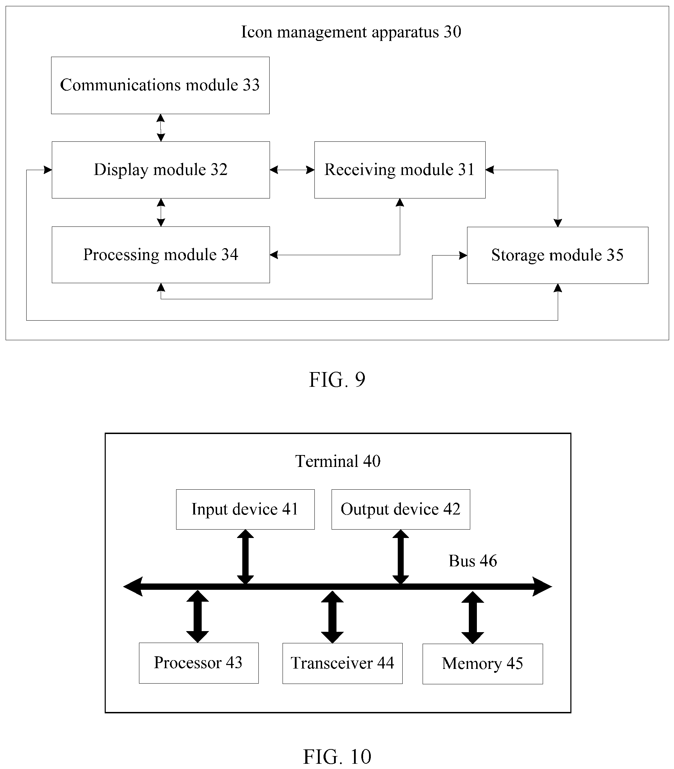

FIG. 9 is a schematic diagram of a possible structure of an icon management apparatus in the foregoing implementations. An icon management apparatus 30 includes a receiving module 31 and a display module 32. The receiving module 31 is configured to support the icon management apparatus 30 in receiving an operation such as an icon management operation, an icon moving operation, a folder creation operation, a screen addition operation, a screen deletion operation, a deletion confirmation operation, a screen moving operation, and an icon management ending operation, from a user. The display module 32 is configured to support the icon management apparatus 30 in displaying, based on the operation received by the receiving module 31, content corresponding to the operation, for example, an icon management interface, an animation of an icon moving process, and a home screen of a terminal. In this implementation of the present disclosure, the icon management apparatus 30 may further include a communications module 33, a processing module 34, and a storage module 35. The communications module 33 is configured to support the icon management apparatus 30 in performing data exchange with the modules in the terminal, and/or support the terminal in communicating with another device such as a server. The processing module 34 is configured to support the icon management apparatus 30 in executing another process of a technology described herein. The storage module 35 is configured to support the icon management apparatus 30 in storing program code and data of the terminal.

The processing module 34 may be a processor or a controller, such as a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. The controller/processor may implement or execute various example logical blocks, modules, and circuits described with reference to content disclosed in the present disclosure. The processor may be a combination of processors implementing a computing function, for example, a combination of one or more microprocessors, or a combination of the DSP and a microprocessor. The communications module 33 may be implemented as a transceiver, a transceiver circuit, a communications interface, or the like. The storage module 35 may be implemented as a memory.

If the receiving module 31 is implemented as an input device, the display module 32 is implemented as an output device, the processing module 34 is implemented as a processor, the communications module 33 is implemented as a transceiver, and the storage module 35 is implemented as a memory, as shown in FIG. 10, a terminal 40 includes an input device 41, an output device 42, a processor 43, a transceiver 44, a memory 45, and a bus 46. The input device 41, the output device 42, the processor 43, the transceiver 44, and the memory 45 are connected to each other by using the bus 46. The bus 46 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

Methods or algorithm steps described in combination with the content disclosed in the present disclosure may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be deployed in one device, or the processor and the storage medium may be deployed as separate components in different devices.

An implementation of the present disclosure provides a graphical user interface (Graphical User Interface, GUI). The graphical user interface is stored in a terminal such as the terminal 40. The terminal includes a display, a memory, and one or more processors. The one or more processors are configured to execute one or more computer programs stored in the memory.

The graphical user interface includes: a first GUI displayed on the display, and a second GUI displayed on the display in response to an input from a user on the first GUI. The second GUI is an icon management interface, and the icon management interface includes at least two display windows, where a first display window is used to display a home screen of the terminal, and a second display window is used to display a newly added screen.

In a possible implementation, in addition to the second GUI displayed, the graphical user interface further includes a third GUI displayed on the display in response to an input from the user on the second GUI. The third GUI is a home screen of the terminal resulting from icon management, and the home screen of the terminal is any one of current home screens of the terminal.

It should be noted that when the terminal is in a portrait mode, the first display window and the second display window are displayed in a top-bottom screen splitting manner in the icon management interface, and the first display window is located above or below the second display window; or when the terminal is in a landscape mode, the first display window and the second display window are displayed in a left-right screen splitting manner in the icon management interface, and the first display window is located on the left or right of the second display window. The home screen of the terminal is any one of the current home screens of the terminal, and the current home screens of the terminal include screens in the first display window and the second display window that are in the icon management interface before the home screen of the terminal resulting from icon management is displayed.

An implementation of the present disclosure provides a readable storage medium. The readable storage medium stores an instruction, and when the instruction is run on a terminal, the terminal is enabled to execute any one of the foregoing method implementations.

An implementation of the present disclosure provides a computer program product. The computer program product includes software code, and the software code is used to execute any one of the foregoing method implementations.

A person skilled in the art should be aware that in the foregoing one or more examples, functions described in the implementations of the present disclosure may be implemented by hardware, software, firmware, or any combination thereof. When the present disclosure is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The scope of protection shall be defined by the appended claims.

## Claims

1. An icon management method, wherein the method comprises:
receiving an icon management operation from a user;
displaying an icon management interface in response to the icon management operation, wherein the icon management interface divides a display screen of a terminal into two display sections, a first display section (207) is used to display one or more home screens of the terminal, and a second display section (208) is used to display at least one newly added screen;
receiving an icon moving operation from the user, wherein the icon moving operation is used to instruct moving a selected icon from a first position to a second position, the first position is in the display screen in the first display section, the second position is in the display screen in the first display section or the second display section, and the first position is different from the second position; and
displaying the selected icon in the second position in response to the icon moving operation;
**characterised in that**
the first display section and the second display section are displayed in separate panes in the icon management interface, and a screen splitting manner of the icon management interface comprises left-right screen splitting or top-bottom screen splitting; and
when the terminal is in a portrait mode, the first display section and the second display section are displayed in the top-bottom screen splitting manner in the icon management interface, and the first display section is located above or below the second display section; or
when the terminal is in a landscape mode, the first display section and the second display section are displayed in the left-right screen splitting manner in the icon management interface, and the first display section is located on the left or right of the second display section;
wherein:
when the terminal is in the portrait mode, the first display section permits the user to browse the home screens of the terminal by flicking left and right in the first display section and the second display section permits the user to browse the at least one newly added screen by flicking left and right in the second display section; and
when the terminal is in the landscape mode, the first display section permits the user to browse the home screens of the terminal by flicking up and down in the first display section and the second display section permits the user to browse the at least one newly added screen by flicking up and down in the second display section;
wherein when an icon exists in the second position, and after the receiving an icon moving operation from a user, the method further comprises:
receiving a folder creation operation from the user; and
the displaying the selected icon in the second position in response to the icon moving operation comprises:
displaying a created folder in the second position in response to the icon moving operation and the folder creation operation, wherein the created folder comprises the icon existing in the second position and the selected icon;
wherein
when the selected icon is a first folder instead of a single icon and the icon existing in the second position is a second folder, determining the icon moving operation to be a misoperation and returning the first folder to the first position and continuing to display the second folder in the second position.

2. The method according to claim 1, wherein after the displaying an icon management interface in response to the icon management operation, the method further comprises:
receiving a screen addition operation from the user; and
adding a new screen to the second display section in response to the screen addition operation.

3. The method according to claim 2, wherein after the displaying an icon management interface in response to the icon management operation, the method further comprises:
displaying a delete key (210) in a blank screen in the second display section, wherein no icon exists in the blank screen;
receiving a screen deletion operation from the user, wherein the screen deletion operation acts on the delete key; and
deleting the blank screen from the second display section in response to the screen deletion operation.

4. The method according to claim 2, wherein after the displaying an icon management interface in response to the icon management operation, the method further comprises:
receiving a screen deletion operation from the user; and
if an icon exists in a screen indicated by the screen deletion operation, prompting the user, in response to the screen deletion operation, that an application program corresponding to the icon in the deleted screen is uninstalled after the screen is deleted;
receiving a deletion confirmation operation from the user; and
deleting, from the second display section in response to the deletion confirmation operation, the screen indicated by the screen deletion operation; or
if no icon exists in the screen indicated by the screen deletion operation, deleting, from the second display section in response to the screen deletion operation, the screen indicated by the screen deletion operation.

5. The method according to claim 2, wherein after the displaying an icon management interface in response to the icon management operation, the method further comprises:
receiving a screen moving operation from the user; and
moving a selected interface to a position indicated by the screen moving operation in response to the screen moving operation.

6. The method according to any one of claims 1 to 5, wherein after the displaying an icon management interface in response to the icon management operation, the method further comprises:
receiving an icon management ending operation from the user; and
displaying, in response to the icon management ending operation, a home screen of the terminal resulting from icon management, wherein the home screen of the terminal is any one of current home screens of the terminal.

7. The method according to claim 6, wherein the current home screens of the terminal comprise screens in the first display section and the second display section that are in the icon management interface before the home screen of the terminal resulting from icon management is displayed.

8. A graphical user interface GUI, wherein the graphical user interface is stored in a terminal, the terminal comprises a display, a memory, and one or more processors, the one or more processors are configured to execute one or more computer programs stored in the memory, and the graphical user interface comprises:
a first GUI displayed on the display;
a second GUI displayed on the display in response to an input from a user on the first GUI, wherein the second GUI is an icon management interface, the icon management interface comprises at least two display sections, a first display section (207) is used to display one or more home screens of the terminal, and a second display section (208) is used to display at least one newly added screen; and
a third GUI displayed on the display in response to an input from the user on the second GUI, wherein the third GUI is a home screen of the terminal resulting from icon management, and the home screen of the terminal is any one of current home screens of the terminal;
**characterised in that**
the first display section and the second display section are displayed in separate panes in the icon management interface, and a screen splitting manner of the icon management interface comprises left-right screen splitting or top-bottom screen splitting; and
when the terminal is in a portrait mode, the first display section and the second display section are displayed in the top-bottom screen splitting manner in the icon management interface, and the first display section is located above or below the second display section; or
when the terminal is in a landscape mode, the first display section and the second display section are displayed in the left-right screen splitting manner in the icon management interface, and the first display section is located on the left or right of the second display section;
wherein:
when the terminal is in the portrait mode, the first display section permits the user to browse the home screens of the terminal by flicking left and right in the first display section and the second display section permits the user to browse the at least one newly added screen by flicking left and right in the second display section; and
when the terminal is in the landscape mode, the first display section permits the user to browse the home screens of the terminal by flicking up and down in the first display section and the second display section permits the user to browse the at least one newly added screen by flicking up and down in the second display section;
wherein the GUI comprises a fourth GUI displayed on the display in response to an icon moving operation for moving a selected icon from a first position in the first display section to a different second position in the second display section,
wherein, when an icon exists in the second position, the fourth GUI comprises a created folder displayed in the second position comprising the icon existing in the second position and the selected icon,
and when the selected icon is a first folder instead of a single icon and the icon existing in the second position is a second folder, the fourth GUI comprises the first folder displayed at the first position and the second folder displayed at the second folder.

9. A terminal (100), comprising a display (110), a memory (102), one or more processors (101), a plurality of application programs, and one or more programs, wherein the one or more programs are stored in the memory, and when the one or more processors execute the one or more programs, the terminal is enabled to perform the method according to any one of claims 1 to 7.

10. A computer readable storage medium, wherein the computer readable storage medium stores a set of instructions, which when run on a terminal causes the terminal to perform the method according to any one of claims 1 to 7.

11. A computer program product, wherein the computer program product comprises a set of instructions, which when run on a terminal causes the terminal to perform the method according to any one of claims 1 to 7.

## Patentansprüche

1. Symbolverwaltungsverfahren, wobei das Verfahren umfasst:
Empfangen eines Symbolverwaltungsvorgangs von einem Benutzer;
Anzeigen einer Symbolverwaltungsschnittstelle als Reaktion auf den Symbolverwaltungsvorgang, wobei die Symbolverwaltungsschnittstelle einen Anzeigebildschirm eines Endgeräts in zwei Anzeigeabschnitte unterteilt, wobei ein erster Anzeigeabschnitt (207) verwendet wird, um einen oder mehrere Startbildschirme des Endgeräts anzuzeigen, und ein zweiter Anzeigeabschnitt (208) verwendet wird, um mindestens einen neu hinzugefügten Bildschirm anzuzeigen;
Empfangen eines Symbolbewegungsvorgangs von dem Benutzer, wobei der Symbolbewegungsvorgang verwendet wird, um ein Bewegen eines ausgewählten Symbols von einer ersten Position zu einer zweiten Position anzuweisen, wobei sich die erste Position auf dem Anzeigebildschirm in dem ersten Anzeigeabschnitt befindet und sich die zweite Position in dem ersten Anzeigeabschnitt oder dem zweiten Anzeigeabschnitt befindet und sich die erste Position von der zweiten Position unterscheidet; und
Anzeigen des ausgewählten Symbols an der zweiten Position als Reaktion auf den Symbolbewegungsvorgang;
**dadurch gekennzeichnet, dass**
der erste Anzeigeabschnitt und der zweite Anzeigeabschnitt in separaten Bereichen in der Symbolverwaltungsschnittstelle angezeigt werden, und eine Bildschirmaufteilungsart der Symbolverwaltungsschnittstelle eine Bildschirmaufteilung von links nach rechts oder eine Bildschirmaufteilung von oben nach unten umfasst; und
wenn sich das Endgerät in einem Hochformatmodus befindet, der erste Anzeigeabschnitt und der zweite Anzeigeabschnitt in der Bildschirmaufteilungsart von oben nach unten in der Symbolverwaltungsschnittstelle angezeigt werden, und sich der erste Anzeigeabschnitt über oder unter dem zweiten Anzeigeabschnitt befindet; oder
wenn sich das Endgerät in einem Querformatmodus befindet, der erste Anzeigeabschnitt und der zweite Anzeigeabschnitt in der Bildschirmaufteilungsart von links nach rechts in der Symbolverwaltungsschnittstelle angezeigt werden, und sich der erste Anzeigeabschnitt links oder rechts von dem zweiten Anzeigeabschnitt befindet;
wobei:
wenn sich das Endgerät in dem Hochformatmodus befindet, der erste Anzeigeabschnitt dem Benutzer ermöglicht, die Startbildschirme des Endgeräts zu durchsuchen, durch ein Wischen nach links und rechts in dem ersten Anzeigeabschnitt, und der zweite Anzeigeabschnitt dem Benutzer ermöglicht, den mindestens einen neu hinzugefügten Bildschirm zu durchsuchen, durch ein Wischen nach links und rechts in dem zweiten Anzeigeabschnitt; und
wenn sich das Endgerät in dem Querformatmodus befindet, der erste Anzeigeabschnitt dem Benutzer ermöglicht, die Startbildschirme des Endgeräts zu durchsuchen, durch ein Wischen nach oben und unten in dem ersten Anzeigeabschnitt, und der zweite Anzeigeabschnitt dem Benutzer ermöglicht, den mindestens einen neu hinzugefügten Bildschirm zu durchsuchen, durch ein Wischen nach oben und unten in dem zweiten Anzeigeabschnitt;
wobei, wenn ein Symbol an der zweiten Position vorhanden ist und nach dem Empfangen eines Symbolbewegungsvorgangs von einem Benutzer, das Verfahren ferner umfasst:
Empfangen eines Ordnererstellungsvorgangs von dem Benutzer; und
das Anzeigen des ausgewählten Symbols an der zweiten Position als Reaktion auf den Symbolbewegungsvorgang umfasst:
Anzeigen eines erstellten Ordners an der zweiten Position als Reaktion auf den Symbolbewegungsvorgang und den Ordnererstellungsvorgang, wobei der erstellte Ordner das Symbol, das an der zweiten Position vorhanden ist, und das ausgewählte Symbol umfasst;
wobei
wenn das ausgewählte Symbol ein erster Ordner anstatt eines einzelnen Symbols ist und das Symbol, das an der zweiten Position vorhanden ist, ein zweiter Ordner ist, Bestimmen, dass der Symbolbewegungsvorgang ein Fehlvorgang ist, und
Zurückbringen des ersten Ordners zu der ersten Position und weiterhin Anzeigen des zweiten Ordners an der zweiten Position.

2. Verfahren nach Anspruch 1, wobei, nach dem Anzeigen einer Symbolverwaltungsschnittstelle als Reaktion auf den Symbolverwaltungsvorgang, das Verfahren ferner umfasst:
Empfangen eines Bildschirmhinzufügungsvorgangs von dem Benutzer; und
Hinzufügen eines neuen Bildschirms zu dem zweiten Anzeigeabschnitt als Reaktion auf den Bildschirmhinzufügungsvorgang.

3. Verfahren nach Anspruch 2, wobei nach dem Anzeigen einer Symbolverwaltungsschnittstelle als Reaktion auf den Symbolverwaltungsvorgang, das Verfahren ferner umfasst:
Anzeigen einer Löschtaste (210) in einem leeren Bildschirm in dem zweiten Anzeigeabschnitt, wobei in dem leeren Bildschirm kein Symbol vorhanden ist;
Empfangen eines Bildschirmlöschvorgangs von dem Benutzer, wobei der Bildschirmlöschvorgang auf die Löschtaste einwirkt; und
Löschen des leeren Bildschirms von dem zweiten Anzeigeabschnitt als Reaktion auf den Bildschirmlöschvorgang.

4. Verfahren nach Anspruch 2, wobei nach dem Anzeigen einer Symbolverwaltungsschnittstelle als Reaktion auf den Symbolverwaltungsvorgang, das Verfahren ferner umfasst:
Empfangen eines Bildschirmlöschvorgangs von dem Benutzer; und
falls ein Symbol in einem Bildschirm, der durch den Bildschirmlöschvorgang angegeben wird, vorhanden ist, Auffordern des Benutzers, als Reaktion auf den Bildschirmlöschvorgang, dass ein Anwendungsprogramm, das dem Symbol in dem gelöschten Bildschirm entspricht, deinstalliert wird, nachdem der Bildschirm gelöscht wurde;
Empfangen eines Löschbestätigungsvorgangs von dem Benutzer; und
Löschen, von dem zweiten Anzeigeabschnitt als Reaktion auf den Löschbestätigungsvorgang, des Bildschirms, der durch den Bildschirmlöschvorgang angegeben wird; oder
falls in dem Bildschirm, der durch den Bildschirmlöschvorgang angezeigt wird, kein Symbol vorhanden ist, Löschen, von dem zweiten Anzeigeabschnitt als Reaktion auf den Bildschirmlöschvorgang, des Bildschirms, der durch den Bildschirmlöschvorgang angegeben wird.

5. Verfahren nach Anspruch 2, wobei nach dem Anzeigen einer Symbolverwaltungsschnittstelle als Reaktion auf den Symbolverwaltungsvorgang, das Verfahren ferner umfasst:
Empfangen eines Bildschirmbewegungsvorgangs von dem Benutzer; und
Bewegen einer ausgewählten Schnittstelle an eine Position, die durch den Bildschirmbewegungsvorgang angegeben wird, als Reaktion auf den Bildschirm bewegungsvorgang.

6. Verfahren nach einem der Ansprüche 1 bis 5, wobei nach dem Anzeigen einer Symbolverwaltungsschnittstelle als Reaktion auf den Symbolverwaltungsvorgang, das Verfahren ferner umfasst:
Empfangen eines Symbolverwaltungsbeendigungsvorgangs von dem Benutzer; und Anzeigen, als Reaktion auf den Symbolverwaltungsbeendigungsvorgang, eines Startbildschirms des Endgeräts, der aus der Symbolverwaltung resultiert, wobei der Startbildschirm des Endgeräts ein beliebiger der aktuellen Startbildschirme des Endgeräts ist.

7. Verfahren nach Anspruch 6, wobei die aktuellen Startbildschirme des Endgeräts Bildschirme in dem ersten Anzeigeabschnitt und in dem zweiten Anzeigeabschnitt umfassen, die sich in der Symbolverwaltungsschnittstelle befinden, bevor der Startbildschirm des Endgeräts, der aus der Symbolverwaltung resultiert, angezeigt wird.

8. Grafische Benutzerschnittstelle, GUI, wobei die grafische Benutzerschnittstelle in einem Endgerät gespeichert ist, das Endgerät eine Anzeige, einen Speicher und einen oder mehrere Prozessoren umfasst, wobei der eine oder die mehreren Prozessoren konfiguriert sind, um ein oder mehrere in dem Speicher gespeicherten Computerprogramme auszuführen, und die grafische Benutzerschnittstelle umfasst:
eine erste GUI, die auf der Anzeige angezeigt wird;
eine zweite GUI, die auf der Anzeige als Reaktion auf eine Eingabe von einem Benutzer auf der ersten GUI angezeigt wird, wobei die zweite GUI eine Symbolverwaltungsschnittstelle ist, die Symbolverwaltungsschnittstelle mindestens zwei Anzeigeabschnitte umfasst, ein erster Anzeigeabschnitt (207) verwendet wird, um einen oder mehrere Startbildschirme des Endgeräts anzuzeigen, und ein zweiter Anzeigeabschnitt (208) verwendet wird, um mindestens einen neu hinzugefügten Bildschirm anzuzeigen; und
eine dritte GUI, die auf der Anzeige als Reaktion auf eine Eingabe des Benutzers auf der zweiten GUI angezeigt wird, wobei die dritte GUI ein Startbildschirm des Endgeräts ist, der aus der Symbolverwaltung resultiert, und der Startbildschirm des Endgeräts ein beliebiger der aktuellen Startbildschirme des Endgeräts ist;
**dadurch gekennzeichnet, dass**
der erste Anzeigeabschnitt und der zweite Anzeigeabschnitt in separaten Bereichen in der Symbolverwaltungsschnittstelle angezeigt werden, und eine Bildschirmaufteilungsart der Symbolverwaltungsschnittstelle eine Bildschirmaufteilung von links nach rechts oder eine Bildschirmaufteilung von oben nach unten umfasst;
und
wenn sich das Endgerät in einem Hochformatmodus befindet, der erste Anzeigeabschnitt und der zweite Anzeigeabschnitt in der Bildschirmaufteilungsart von oben nach unten in der Symbolverwaltungsschnittstelle angezeigt werden, und sich der erste Anzeigeabschnitt über oder unter dem zweiten Anzeigeabschnitt befindet;
oder
wenn sich das Endgerät in einem Querformatmodus befindet, der erste Anzeigeabschnitt und der zweite Anzeigeabschnitt in der Bildschirmaufteilungsart von links nach rechts in der Symbolverwaltungsschnittstelle angezeigt werden, und sich der erste Anzeigeabschnitt links oder rechts von dem zweiten Anzeigeabschnitt befindet;
wobei:
wenn sich das Endgerät in dem Hochformatmodus befindet, der erste Anzeigeabschnitt dem Benutzer ermöglicht, die Startbildschirme des Endgeräts zu durchsuchen, durch ein Wischen nach links und rechts in dem ersten Anzeigeabschnitt, und der zweite Anzeigeabschnitt dem Benutzer ermöglicht, den mindestens einen neu hinzugefügten Bildschirm zu durchsuchen, durch ein Wischen nach links und rechts in dem zweiten Anzeigeabschnitt; und
wenn sich das Endgerät in dem Querformatmodus befindet, der erste Anzeigeabschnitt dem Benutzer ermöglicht, die Startbildschirme des Endgeräts zu durchsuchen, durch ein Wischen nach oben und unten in dem ersten Anzeigeabschnitt, und der zweite Anzeigeabschnitt dem Benutzer ermöglicht, den mindestens einen neu hinzugefügten Bildschirm zu durchsuchen, durch ein Wischen nach oben und unten in dem zweiten Anzeigeabschnitt;
wobei die GUI eine vierte GUI umfasst, die auf der Anzeige als Reaktion auf einen Symbolbewegungsvorgang angezeigt wird, zum Bewegen eines ausgewählten Symbol von einer ersten Position in dem ersten Anzeigeabschnitt zu einer unterschiedlichen zweiten Position in dem zweiten Anzeigeabschnitt,
wobei, wenn ein Symbol an der zweiten Position vorhanden ist, die vierte GUI einen erstellten Ordner umfasst, der an der zweiten Position angezeigt wird, der das Symbol, das an der zweiten Position vorhanden ist, und das ausgewählte Symbol umfasst, und wenn das ausgewählte Symbol ein erster Ordner anstatt eines einzelnen Symbols ist und das Symbol, das an der zweiten Position vorhanden ist, ein zweiter Ordner ist, die vierte GUI den ersten Ordner, der an der ersten Position angezeigt wird, und den zweiten Ordner, der am zweiten Ordner angezeigt wird, umfasst.

9. Endgerät (100), das eine Anzeige (110), einen Speicher (102), einen oder mehrere Prozessoren (101), eine Vielzahl von Anwendungsprogrammen und ein oder mehrere Programme umfasst, wobei das eine oder die mehreren Programme in dem Speicher gespeichert sind und wenn der eine oder die mehreren Prozessoren das eine oder die mehreren Programme ausführen, das Endgerät aktiviert wird, das Verfahren nach einem der Ansprüche 1 bis 7 durchzuführen.

10. Computerlesbares Speichermedium, wobei das computerlesbare Speichermedium einen Satz von Anweisungen speichert, die, wenn sie auf einem Endgerät laufen, das Endgerät veranlassen, das Verfahren nach einem der Ansprüche 1 bis 7 durchzuführen.

11. Computerprogrammprodukt, wobei das Computerprogrammprodukt einen Satz von Anweisungen umfasst, die, wenn sie auf einem Endgerät laufen, das Endgerät veranlassen, das Verfahren nach einem der Ansprüche 1 bis 7 durchzuführen.

## Revendications

1. Procédé de gestion d'icônes, dans lequel le procédé comprend :
la réception d'une opération de gestion d'icônes de la part d'un utilisateur ;
l'affichage d'une interface de gestion d'icônes en réponse à l'opération de gestion d'icônes, dans lequel l'interface de gestion d'icônes répartit un écran d'affichage d'un terminal en deux sections d'affichage, une première section d'affichage (207) est utilisée pour afficher un ou plusieurs écrans d'accueil du terminal, et une seconde section d'affichage (208) est utilisée pour afficher au moins un écran nouvellement ajouté ;
la réception d'une opération de déplacement d'icônes de la part de l'utilisateur, dans lequel l'opération de déplacement d'icônes est utilisée pour ordonner le déplacement d'une icône sélectionnée d'une première position à une seconde position, la première position est dans l'écran d'affichage dans la première section d'affichage, la seconde position est dans l'écran d'affichage dans la première section d'affichage ou la seconde section d'affichage, et la première position est différente de la seconde position ; et
l'affichage de l'icône sélectionnée dans la seconde position en réponse à l'opération de déplacement d'icônes ;
**caractérisé en ce que**
la première section d'affichage et la seconde section d'affichage sont affichées dans des volets séparés dans l'interface de gestion d'icônes, et une manière de division d'écran de l'interface de gestion d'icônes comprend une division d'écran gauche-droite ou une division d'écran haut-bas ; et
lorsque le terminal est en mode portrait, la première section d'affichage et la seconde section d'affichage sont affichées selon la manière de division d'écran haut-bas dans l'interface de gestion des icônes, et la première section d'affichage est située au-dessus ou en dessous de la seconde section d'affichage ; ou
lorsque le terminal est en mode paysage, la première section d'affichage et la seconde section d'affichage sont affichées selon la manière de division d'écran gauche-droite dans l'interface de gestion d'icônes, et la première section d'affichage est située à gauche ou à droite de la seconde section d'affichage ;
dans lequel :
lorsque le terminal est en mode portrait, la première section d'affichage permet à l'utilisateur de parcourir les écrans d'accueil du terminal en cliquant à gauche et à droite dans la première section d'affichage et la seconde section d'affichage permet à l'utilisateur de parcourir l'au moins un écran nouvellement ajouté en cliquant à gauche et à droite dans la seconde section d'affichage ; et
lorsque le terminal est en mode paysage, la première section d'affichage permet à l'utilisateur de parcourir les écrans d'accueil du terminal en cliquant en haut et en bas dans la première section d'affichage et la seconde section d'affichage permet à l'utilisateur de parcourir l'au moins un écran nouvellement ajouté en cliquant en haut et en bas dans la seconde section d'affichage ;
dans lequel lorsqu'une icône existe dans la seconde position, et après la réception d'une opération de déplacement d'icônes de la part d'un utilisateur, le procédé comprend en outre :
la réception d'une opération de création de dossier de la part de l'utilisateur ; et
l'affichage de l'icône sélectionnée dans la seconde position en réponse à l'opération de déplacement d'icônes comprend :
l'affichage d'un dossier créé dans la seconde position en réponse à l'opération de déplacement d'icônes et à l'opération de création de dossier, le dossier créé comprenant l'icône existant dans la seconde position et l'icône sélectionnée ;
dans lequel
lorsque l'icône sélectionnée est un premier dossier au lieu d'une icône unique et que l'icône existant dans la seconde position est un second dossier, la détermination du fait que l'opération de déplacement d'icônes est une mauvaise opération et le retour du premier dossier à la première position et la poursuite de l'affichage du second dossier dans la seconde position.

2. Procédé selon la revendication 1, dans lequel après l'affichage d'une interface de gestion d'icônes en réponse à l'opération de gestion d'icônes, le procédé comprend en outre :
la réception d'une opération d'ajout d'écran de la part de l'utilisateur ; et
l'ajout d'un nouvel écran à la seconde section d'affichage en réponse à l'opération d'ajout d'écran.

3. Procédé selon la revendication 2, dans lequel après l'affichage d'une interface de gestion d'icônes en réponse à l'opération de gestion d'icônes, le procédé comprend en outre :
l'affichage d'une touche de suppression (210) dans un écran vide dans la seconde section d'affichage, dans lequel aucune icône n'existe dans l'écran vide ;
la réception d'une opération de suppression d'écran de la part de l'utilisateur, l'opération de suppression d'écran agissant sur la touche de suppression ; et
la suppression de l'écran vierge de la seconde section d'affichage en réponse à l'opération de suppression d'écran.

4. Procédé selon la revendication 2, dans lequel après l'affichage d'une interface de gestion d'icônes en réponse à l'opération de gestion d'icônes, le procédé comprend en outre :
la réception d'une opération de suppression d'écran de la part de l'utilisateur ; et
si une icône existe dans un écran indiqué par l'opération de suppression d'écran, l'invite de l'utilisateur, en réponse à l'opération de suppression d'écran, à ce qu'un programme d'application correspondant à l'icône dans l'écran supprimé soit désinstallé après la suppression de l'écran ;
la réception d'une opération de confirmation de suppression de la part de l'utilisateur ; et
la suppression, de la seconde section d'affichage en réponse à l'opération de confirmation de suppression, de l'écran indiqué par l'opération de suppression d'écran ; ou
si aucune icône n'existe sur l'écran indiqué par l'opération de suppression d'écran, la suppression, à partir de la seconde section d'affichage en réponse à l'opération de suppression d'écran, de l'écran indiqué par l'opération de suppression d'écran.

5. Procédé selon la revendication 2, dans lequel après l'affichage d'une interface de gestion d'icônes en réponse à l'opération de gestion d'icônes, le procédé comprend en outre :
la réception d'une opération de déplacement d'écran de la part de l'utilisateur ; et
le déplacement d'une interface sélectionnée vers une position indiquée par l'opération de déplacement d'écran en réponse à l'opération de déplacement d'écran.

6. Procédé selon l'une quelconque des revendications 1 à 5, dans lequel après l'affichage d'une interface de gestion d'icônes en réponse à l'opération de gestion d'icônes, le procédé comprend en outre :
la réception d'une opération de fin de gestion d'icônes de la part de l'utilisateur ; et
l'affichage, en réponse à l'opération de fin de gestion d'icônes, d'un écran d'accueil du terminal résultant de la gestion d'icônes, l'écran d'accueil du terminal étant l'un quelconque des écrans d'accueil actuels du terminal.

7. Procédé selon la revendication 6, dans lequel les écrans d'accueil actuels du terminal comprennent des écrans dans la première section d'affichage et la seconde section d'affichage qui sont dans l'interface de gestion d'icônes avant que l'écran d'accueil du terminal résultant de la gestion d'icônes soit affiché.

8. Interface utilisateur graphique, GUI, dans laquelle l'interface utilisateur graphique est stockée dans un terminal, le terminal comprend une unité d'affichage, une mémoire et un ou plusieurs processeurs, le ou les processeurs sont configurés pour exécuter un ou plusieurs programmes informatiques stockés dans la mémoire, et l'interface utilisateur graphique comprend :
une première GUI affichée sur l'affichage ;
une deuxième GUI affichée sur l'écran en réponse à une entrée de la part d'un utilisateur sur la première GUI, la deuxième GUI étant une interface de gestion d'icônes, l'interface de gestion d'icônes comprenant au moins deux sections d'affichage, une première section d'affichage (207) est utilisée pour afficher un ou plusieurs écrans d'accueil du terminal, et une seconde section d'affichage (208) est utilisée pour afficher au moins un écran nouvellement ajouté ; et
une troisième GUI affichée sur l'affichage en réponse à une entrée de la part de l'utilisateur sur la deuxième GUI, la troisième GUI étant un écran d'accueil du terminal résultant de la gestion des icônes, et l'écran d'accueil du terminal étant l'un quelconque des écrans d'accueil actuels du terminal ;
**caractérisé en ce que**
la première section d'affichage et la seconde section d'affichage sont affichées dans des volets séparés dans l'interface de gestion d'icônes, et une manière de division d'écran de l'interface de gestion d'icônes comprend une division d'écran gauche-droite ou une division d'écran haut-bas ; et
lorsque le terminal est en mode portrait, la première section d'affichage et la seconde section d'affichage sont affichées selon la manière de division d'écran haut-bas dans l'interface de gestion des icônes, et la première section d'affichage est située au-dessus ou en dessous de la seconde section d'affichage ; ou
lorsque le terminal est en mode paysage, la première section d'affichage et la seconde section d'affichage sont affichées selon la manière de division d'écran gauche-droite dans l'interface de gestion d'icônes, et la première section d'affichage est située à gauche ou à droite de la seconde section d'affichage ;
dans lequel :
lorsque le terminal est en mode portrait, la première section d'affichage permet à l'utilisateur de parcourir les écrans d'accueil du terminal en cliquant à gauche et à droite dans la première section d'affichage et la seconde section d'affichage permet à l'utilisateur de parcourir l'au moins un écran nouvellement ajouté en cliquant à gauche et à droite dans la seconde section d'affichage ; et
lorsque le terminal est en mode paysage, la première section d'affichage permet à l'utilisateur de parcourir les écrans d'accueil du terminal en cliquant en haut et en bas dans la première section d'affichage et la seconde section d'affichage permet à l'utilisateur de parcourir l'au moins un écran nouvellement ajouté en cliquant en haut et en bas dans la seconde section d'affichage ;
dans lequel la GUI comprend une quatrième GUI affichée sur l'affichage en réponse à une opération de déplacement d'icônes pour déplacer une icône sélectionnée d'une première position dans la première section d'affichage à une seconde position différente dans la seconde section d'affichage,
dans lequel, lorsqu'une icône existe dans la seconde position, la quatrième GUI comprend un dossier créé affiché dans la seconde position comprenant l'icône existant dans la seconde position et l'icône sélectionnée,
et lorsque l'icône sélectionnée est un premier dossier au lieu d'une seule icône et que l'icône existant dans la deuxième position est un deuxième dossier, la quatrième GUI comprend le premier dossier affiché à la première position et le second dossier affiché au second dossier.

9. Terminal (100), comprenant une unité d'affichage (110), une mémoire (102), un ou plusieurs processeurs (101), une pluralité de programmes d'application et un ou plusieurs programmes, dans lequel le ou les programmes sont stockés dans la mémoire, et lorsque le ou les processeurs exécutent le ou les programmes, le terminal est autorisé à réaliser le procédé selon l'une quelconque des revendications 1 à 7.

10. Support de stockage lisible par ordinateur, dans lequel le support de stockage lisible par ordinateur stocke un ensemble d'instructions qui, lorsqu'elles sont exécutées sur un terminal, amènent le terminal à réaliser le procédé selon l'une quelconque des revendications 1 à 7.

11. Produit de programme informatique, dans lequel le produit de programme informatique comprend un ensemble d'instructions qui, lorsqu'elles sont exécutées sur un terminal, amènent le terminal à réaliser le procédé selon l'une quelconque des revendications 1 à 7.
